# EUROPEAN PATENT APPLICATION

(11) **EP 1 677 303 A1**
(43) Date of publication of application: **05.07.2006**
(21) Application number: 05027807.6
(22) Date of filing: 19.12.2005
(51) Int. Cl.: G11B 27/034, G11B 27/34

(54) **Recording apparatus and method, program, and recording medium**

(30) Priority: 04.01.2005 JP 2005000005
(71) Applicant: SONY CORPORATION, Tokyo (JP)
(72) Inventor: Mae, Atsushi, Shinagawa-ku Tokyo (JP); Aridome, Kenichiro, Shinagawa-ku Tokyo (JP); Isobe, Yukio, Shinagawa-ku Tokyo (JP)
(74) Representative: Müller - Hoffmann & Partner

(57) **Abstract**

A recording apparatus includes the following elements. A reader reads out, to a memory, image data of each representative image of a single or a plurality of playback units recorded on the disc and encoded by a predetermined encoding method. A generator decodes the image data read by the reader to generate the menu screen. An encoded data storage unit encodes the menu screen generated by the generator by a predetermined encoding method to store the encoded data in the memory. A determining unit determines whether the encoded data stored in the memory by the encoded data storage unit satisfies a preset condition. A disc recorder records the encoded data at a position of the disc determined by the predetermined format if the determining unit determines that the encoded data stored in the memory satisfies the preset condition.

## Description

### CROSS REFERENCES TO RELATED APPLICATIONS

The present invention contains subject matter related to Japanese Patent Application JP 2005-000005 filed in the Japanese Patent Office on January 4, 2005, the entire contents of which are incorporated herein by reference.

### BACKGROUND OF THE INVENTION

### 1. Field of the Invention

The present invention relates to recording apparatuses and methods, programs, and recording media. More particularly, the invention relates to a recording apparatus and method, a program, and a recording medium that can reduce a seek time of a head to speedily perform processing for generating predetermined data from a plurality of data which are discretely recorded on a recording medium, such as a disc.

### 2. Description of the Related Art

Recording/playback apparatuses, such as digital video cameras and digital versatile disc (DVD) recorders, for recording various types of data, such as images and sound, on optical discs, such as DVDs, or playing back various types of data recorded on optical discs are coming into widespread use. Normally, finalizing processing is necessary for playing back data recorded on DVDs in a playback-only DVD player. Finalizing processing is to convert data recorded on a DVD into a data format that is compatible with a playback-only DVD read only memory (DVD-ROM). Generally, data format that can be played back by a playback-only DVD player is a DVD video format. Finalizing processing on DVDs is hereinafter sometimes simply referred to as "finalizing".

When performing finalizing, a video manager (VMG) menu screen, which serves as a menu screen to be displayed when playing back data in a DVD player, is also generated. VMG is data including video manager information (VMGI), a video object set for VMG menu (VMGM VOBS), and backup of VMGI (VMGI BUP). Control information concerning the overall video zones of a DVD is recorded in the VMGI. Information related to a title selection menu is recorded in the VMGI VOBS. The same information as VMGI is recorded in the VMGI BUP.

The following still-image conversion technique is disclosed in Japanese Unexamined Patent Application Publication No. 2004-201170. In this technique, still image data recorded on a DVD in a Joint Photographic Experts Group (JPEG) format is converted into the same format as moving picture data, thereby allowing a user to appreciate still images together with moving pictures by using a playback-only DVD player.

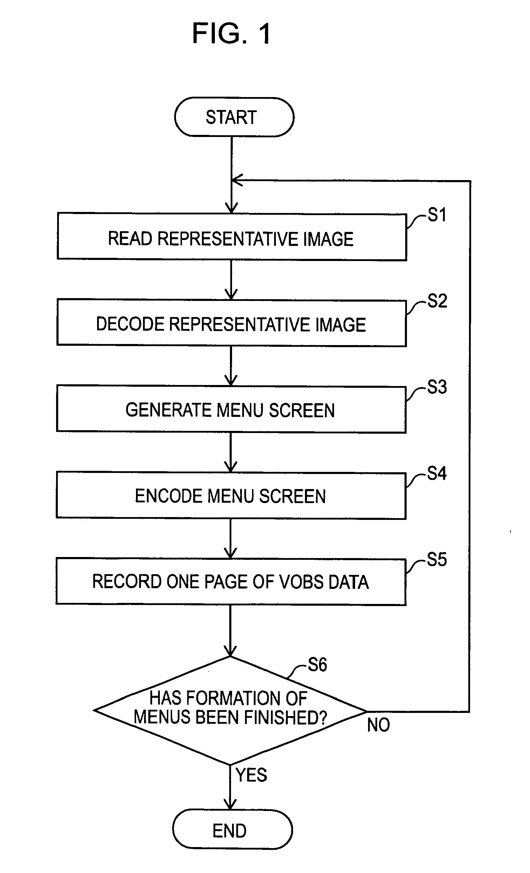

A typical example of known menu screen formation processing by a DVD recorder is described below with reference to the flowchart in Fig. 1.

In step S1, a DVD recorder reads a representative image recorded on a disc (DVD). In step S2, the DVD recorder decodes the representative image read in step S1. In step S3, the DVD recorder forms a menu screen by pasting the representative image decoded in step S2 on a background. Then, in step S4, the DVD recorder converts the menu screen formed in step S3 into, for example, intra-coded (I)-pictures of moving picture experts group (MPEG) images. In step S5, the DVD recorder records one page of VOBS data of the menu screen on the disc. The DVD recorder then determines in step S6 whether the formation of the menu has been finished. If the DVD recorder determines that the formation of the menu has not been finished, the process returns to step S1.

Thereafter, steps S1 through S5 are repeated, and the subsequent page of the menu screen is recorded on the disc. In this manner, steps S1 through S5 are repeated until it is determined in step S6 that the menu formation has been finished.

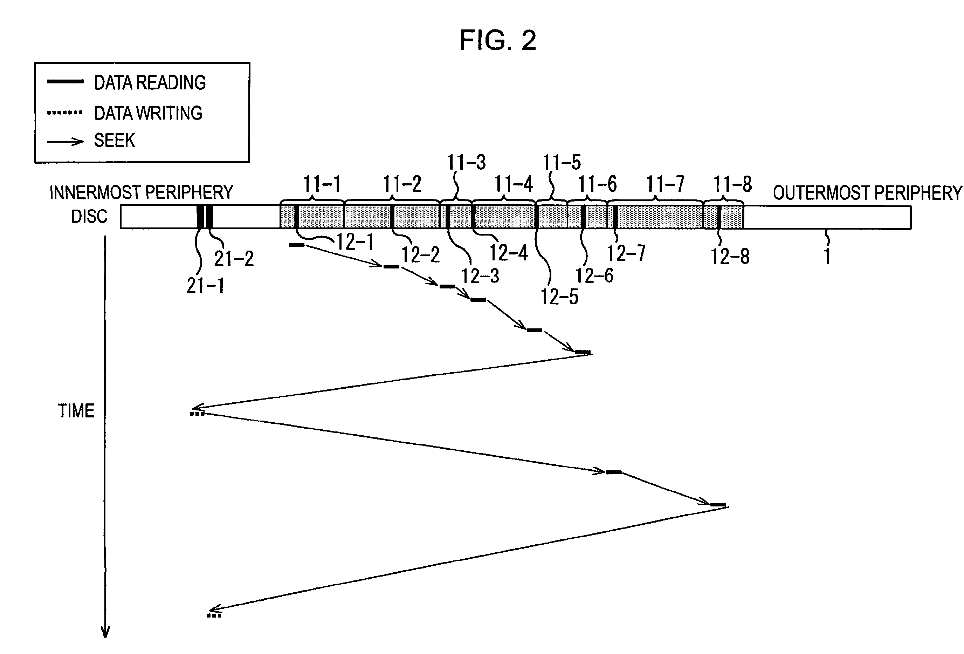

The menu screen formation processing is discussed in greater detail below with reference to Fig. 2. Fig. 2 illustrates the relationship between disc data 1 recorded on the disc and the data reading time, the data writing time, and the seek time of the head of the DVD recorder. In the disc data 1, the data recording positions from data recorded in the inner periphery of the disc to data recorded in the outer periphery of the disc are indicated from the left side to the right side in Fig. 1. In Fig. 1, the vertical axis represents the time axis, and the time elapses from the top to the bottom in Fig. 1. In Fig. 1, the reading of data from the disc is indicated by the solid lines, the writing of data into the disc is designated by the broken lines, and the seek operation of the head is indicated by the arrows.

In the disc data 1, moving picture data compressed by an MPEG2 method is recorded in the playback units, such as chapters. In this example, 8 chapters, such as chapters 11-1 through 11-8, are recorded.

Each chapter contains image data, which serves as a representative image (for example, MPEG I-pictures) of each chapter. In this example, representative image data 12-1 through 12-8 are recorded in association with the chapters 11-1 through 11-8, respectively.

In steps S1 and S2 in Fig. 1, the representative image data 12-1, 12-2, 12-3, and so on, are sequentially read out from the disc and are played back. For example, if a menu screen includes 6 representative images, after reading the representative image data 12-6, in step S3, the menu screen (image data of a baseband image) is formed based on the read representative image data. In step S4, the menu screen image data is encoded into image data of MPEG I-pictures. In step S5, the encoded image data is then recorded at a predetermined position of the inner periphery of the disc as VOBS data. Accordingly, after reading the representative image data 12-6, as shown in Fig. 2, the head of the DVD recorder moves (seeks) by a considerable distance from the outer periphery to the inner periphery.

Thereafter, the remaining representative image data 12-7 and 12-8 are read out and played back to form another menu screen. The menu screen is then encoded and recorded on the disc. Accordingly, after writing data 21-1, which is VOBS data, the head of the DVD recorder moves by a considerable distance from the inner periphery to the outer periphery to read the representative image data 12-7 and 12-8, and then, the head moves again by a considerable distance from the outer periphery to the inner periphery.

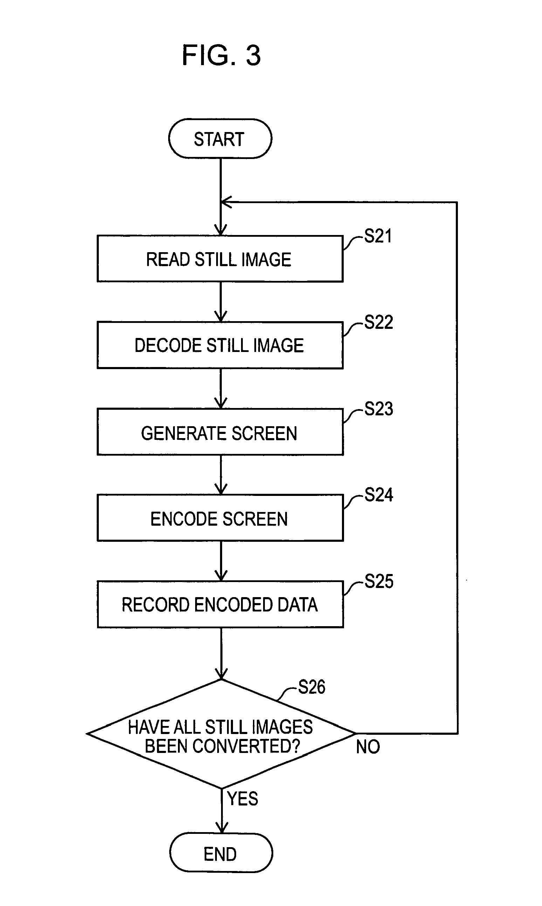

Known still-image conversion processing by a DVD recorder is described below with reference to the flowchart in Fig. 3.

In step S21, the DVD recorder reads image data of a still image from a disc (DVD). In step S22, the DVD recorder decodes the still image read in step S21. Then, in step S23, the DVD recorder forms a still image screen based on the still image decoded in step S22. In step S24, the DVD recorder converts (encodes) the still image screen formed in step S23 into, for example, MPEG I-pictures. In step S25, the DVD recorder records the encoded still image screen on the disc. The DVD recorder then determines in step S26 whether all still images have been converted. If it is determined that not all still images have been converted, the process returns to step S21.

Thereafter, steps S21 through S25 are repeated, and the subsequent still image screen is recorded on the disc. In this manner, steps S21 through S25 are repeated until it is determined in step S26 that all still images have been converted.

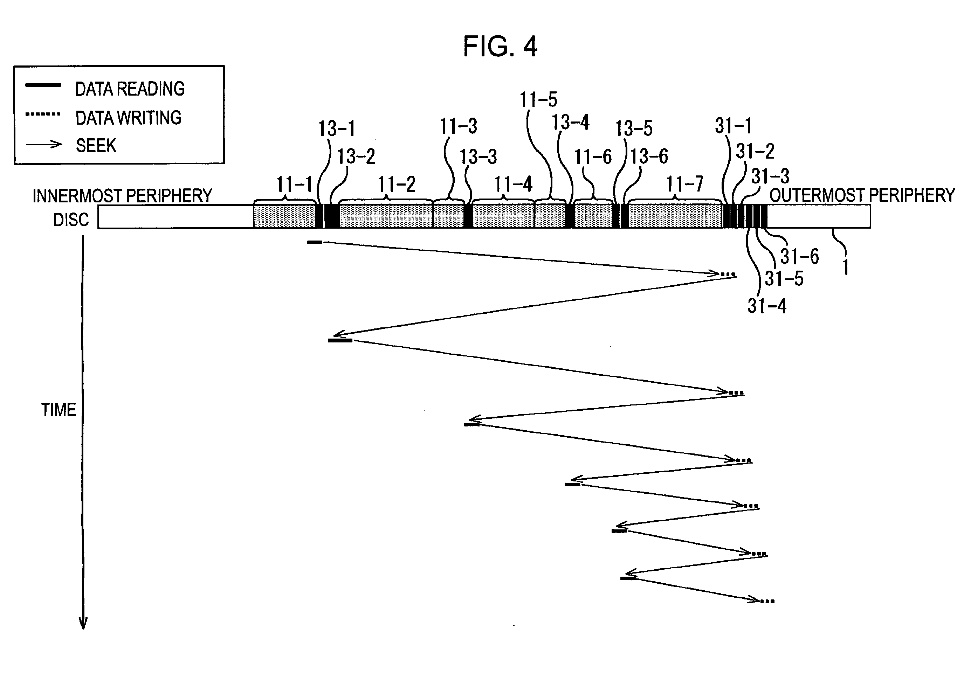

The still-image conversion processing is discussed in greater detail below with reference to Fig. 4. Fig. 4 illustrates, as in Fig. 2, the relationship between disc data 1 recorded on the disc and the data reading time, the data writing time, and the seek time of the head of the DVD recorder. In the disc data 1, still image data 13-1 through 13-6 recorded in the JPEG format are recorded together with the chapters 11-1 through 11-7, which are playback units of moving picture data compressed by, for example, an MPEG2 method.

In steps S21 and S22 in Fig. 3, the image data 13-1 is read and played back. In step S23, a still image screen (baseband image data) is formed based on the read image data. Then, in step S24, the still image data is encoded into MPEG I-pictures. In step S25, the encoded data is recorded at a position (at the outer periphery of the disc) after the recording position of the chapter 11-7 as converted data 31-1. Accordingly, after reading the image data 13-1, as shown in Fig. 4, the head of the DVD recorder moves by a considerable distance from the inner periphery to the outer periphery of the disc.

Thereafter, the still image data 13-2 is read out and is played back to generate a still image screen. The still image screen is then encoded and is recorded on the disc. Accordingly, after writing the converted data 31-1, the head of the DVD recorder moves by a considerable distance from the outer periphery to the inner periphery of the disc to read the image data 13-2, and moves again by a considerable distance from the inner periphery to the outer periphery. In this manner, the seek operation accompanying the data reading and writing is repeated every time one still image is converted.

### SUMMARY OF THE INVENTION

In the above-described related art, as discussed above, the occurrences of seek operations of the head caused by the reading and writing of data are frequent. Accordingly, it considerably takes time to generate menu screen data or to generate still image data conducted by still image conversion. In particular, as shown in Figs. 2 and 4, seek operations (from the inner periphery to the outer periphery or from the outer periphery to the inner periphery of a disc) accompanying the writing of data into the disc are the major factor for increasing the time for processing, such as generating menu screen data or still image data conducted by still image conversion. It is thus important to reduce the seek time by decreasing the occurrences of seek operations in order to speedily generate predetermined data in finalizing processing.

Accordingly, it is desirable to reduce the seek time of a head to speedily perform processing for generating predetermined data from a plurality of data which are discretely recorded on a recording medium, such as a disc.

According to an embodiment of the present invention, there is provided a first recording apparatus for generating data of a menu screen for a disc on which data is recorded based on a predetermined format. The first recording apparatus includes reading means for reading out, to a memory, image data of each representative image of a single or a plurality of playback units recorded on the disc and encoded by a predetermined encoding method, generating means for decoding the image data read by the reading means to generate the menu screen, encoded data storage means for encoding the menu screen generated by the generating means by a predetermined encoding method to store the encoded data in the memory, determining means for determining whether the encoded data stored in the memory by the encoded data storage means satisfies a preset condition, and disc recording means for recording the encoded data at a position of the disc determined by the predetermined format if the determining means determines that the encoded data stored in the memory satisfies the preset condition.

The preset condition may be such that the number of encoded data stored in the memory by the encoded data storage means has reached a predetermined number.

The preset condition may be such that the amount of encoded data stored in the memory by the encoded data storage means has reached a predetermined ratio of the storage capacity of the memory.

The determining means may determine whether the image data read out to the memory by the reading means satisfies a preset condition, and if the determining means determines that the image data stored in the memory satisfies the preset condition, the generating means may generate the menu screen, the encoded data storage means may encode the menu screen by a predetermined encoding method to store the encoded data in the memory, and the disc recording means may record the encoded data at a position of the disc determined by the predetermined format.

According to an embodiment of the present invention, there is provided a first recording method for a recording apparatus that generates data of a menu screen for a disc on which data is recorded based on a predetermined format. The first recording method includes the steps of: reading out, to a memory, image data of each representative image of a single or a plurality of playback units recorded on the disc. and encoded by a predetermined encoding method, generating the menu screen by decoding the read image data, encoding the generated menu screen by a predetermined encoding method to store the encoded data in the memory, determining whether the encoded data stored in the memory satisfies a preset condition, and recording the encoded data at a position of the disc determined by the predetermined format if it is determined that the encoded data stored in the memory satisfies the preset condition.

According to an embodiment of the present invention, there is provided a first program for a recording apparatus that generates data of a menu screen for a disc on which data is recorded based on a predetermined format. The first program allows a computer to execute processing including the steps of: controlling the reading of image data of each representative image of a single or a plurality of playback units recorded on the disc and encoded by a predetermined encoding method to a memory; controlling the generation of the menu screen by controlling the decoding of the read image data; controlling the encoding of the generated menu screen by a predetermined encoding method to control the storage of the encoded data in the memory; controlling a determination as to whether the encoded data stored in the memory satisfies a preset condition; and controlling the recording of the encoded data at a position of the disc determined by the predetermined format if it is determined that the encoded data stored in the memory satisfies the preset condition.

According to an embodiment of the present invention, there is provided a first recording medium recording a program thereon for a recording apparatus that generates data of a menu screen for a disc on which data is recorded based on a predetermined format. The program allows a computer to execute processing including the steps of: controlling the reading of image data of each representative image of a single or a plurality of playback units recorded on the disc and encoded by a predetermined encoding method to a memory; controlling the generation of the menu screen by controlling the decoding of the read image data; controlling the encoding of the generated menu screen by a predetermined encoding method to control the storage of the encoded data in the memory; controlling a determination as to whether the encoded data stored in the memory satisfies a preset condition; and controlling the recording of the encoded data at a position of the disc determined by the predetermined format if it is determined that the encoded data stored in the memory satisfies the preset condition.

According to the first recording apparatus, recording method, program, and recording medium, image data of each representative image of a single or a plurality of playback units recorded on a disc and encoded by a predetermined method is read out to a memory. The read image data is then decoded so that a menu screen is generated. The generated menu screen is then encoded by a predetermined encoding method and the encoded image data is stored in the memory. It is then determined whether the data stored in the memory satisfies a preset condition. If the data stored in the memory is found to satisfy the preset condition, the data is recorded at a position of the disc determined by a predetermined format.

According to another embodiment of the present invention, there is provided a second recording apparatus for converting image data of a still image encoded by a first method into image data encoded by a second method, the image data of the still image being recorded on a disc on which data is recorded based on a predetermined format. The second recording apparatus includes reading means for reading out image data of a single or a plurality of still images encoded by the first method and recorded on the disc to a memory, generating means for decoding the image data read by the reading means to generate a still image screen corresponding to the image data, encoded data storage means for encoding the still image screen generated by the generating means based on the second method to store the encoded data in the memory, determining means for determining whether the encoded data stored in the memory by the encoded data storage means satisfies a preset condition, and disc recording means for recording the encoded data at a position of the disc determined by the predetermined format if the determining means determines that the encoded data stored in the memory satisfies the preset condition.

The preset condition may be such that the number of encoded data stored in the memory by the encoded data storage means has reached a predetermined number.

The preset condition may be such that the amount of encoded data stored in the memory by the encoded data storage means has reached a predetermined ratio of the storage capacity of the memory.

The determining means may determine whether the image data read out to the memory by the reading means satisfies a preset condition, and if the determining means determines that the image data stored in the memory satisfies the preset condition, the generating means may generate the still image screen, the encoded data storage means may encode the still image screen by the second method to store the encoded data in the memory, and the disc recording means may record the encoded data at a position of the disc determined by the predetermined format.

According to another embodiment of the present invention, there is provided a second recording method for a recording apparatus that converts image data of a still image encoded by a first method into image data encoded by a second method, the image data of the still image being recorded on a disc on which data is recorded based on a predetermined format. The second recording method includes the steps of: reading out image data of a single or a plurality of still images encoded by the first method and recorded on the disc to a memory; generating a still image screen corresponding to the image data by decoding the read image data; encoding the generated still image screen by the second method to store the encoded data in the memory; determining whether the encoded data stored in the memory satisfies a preset condition; and recording the encoded data at a position of the disc determined by the predetermined format if it is determined that the encoded data stored in the memory satisfies the preset condition.

According to another embodiment of the present invention, there is provided a second program for a recording apparatus that converts image data of a still image encoded by a first method into image data encoded by a second method, the image data of the still image being recorded on a disc on which data is recorded based on a predetermined format. The second program allows a computer to execute processing including the steps of: controlling the reading of image data of a single or a plurality of still images encoded by the first method and recorded on the disc to a memory; controlling the generation of a still image screen corresponding to the image data by controlling the decoding of the read image data; controlling the encoding of the generated still image screen by the second method to control the storage of the encoded data in the memory; controlling a determination as to whether the encoded data stored in the memory satisfies a preset condition; and controlling the recording of the encoded data at a position of the disc determined by the predetermined format if it is determined that the encoded data stored in the memory satisfies the preset condition.

According to another embodiment of the present invention, there is provided a second recording medium recording a program thereon for a recording apparatus that converts image data of a still image encoded by a first method into image data encoded by a second method, the image data of the still image being recorded on a disc on which data is recorded based on a predetermined format. The program allows a computer to execute processing including the steps of: controlling the reading of image data of a single or a plurality of still images encoded by the first method and recorded on the disc to a memory; controlling the generation of a still image screen corresponding to the image data by controlling the decoding of the read image data; controlling the encoding of the generated still image screen by the second method to control the storage of the encoded data in the memory; controlling a determination as to whether the encoded data stored in the memory satisfies a preset condition; and controlling the recording of the encoded data at a position of the disc determined by the predetermined format if it is determined that the encoded data stored in the memory satisfies the preset condition.

According to the second recording apparatus, recording method, program, and recording medium, image data of a single or a plurality of still images encoded by a first method and recorded on a disc is read out to a memory. The read image data is decoded so that a still image screen corresponding to the image data is generated. The still image screen is then encoded based on the second method so that the encoded data is stored in the memory. It is then determined whether the data stored in the memory satisfies a preset condition. If the data stored in the memory is found to satisfy the preset condition, the encoded data is recorded at a position of the disc determined by the predetermined format.

According to an embodiment of the present invention, data generation processing can be speedily performed. In particular, predetermined data can be speedily generated from a plurality of data discretely recorded on a recording. medium, such as a disc, thereby reducing the seek time of a head.

### BRIEF DESCRIPTION OF THE DRAWINGS

Fig. 1 is a flowchart illustrating an example of known menu formation processing;
Fig. 2 illustrates the relationship between data recorded on a disc and the data reading, the data writing, and the seek time of a head;
Fig. 3 is a flowchart illustrating an example of known still image conversion processing;
Fig. 4 illustrates the relationship between data recorded on a disc and the data reading, the data writing, and the seek time of a head;
Fig. 5 is a block diagram illustrating an example of the configuration of a recording/playback apparatus according to an embodiment of the present invention;
Fig. 6 is a block diagram illustrating an example of the detailed configuration of a recording/playback controller shown in Fig. 5;
Fig. 7 is a block diagram illustrating an example of the functional configuration of software executed by a central processing unit (CPU) shown in Fig. 6;
Fig. 8 illustrates an example in which VMG menus are generated from data recorded on a disc;
Fig. 9 illustrates an example in which still image data recorded on a disc is converted;
Fig. 10 illustrates a DVD format;
Fig. 11 illustrates positions at which still image data is recorded in the DVD format shown in Fig. 10;
Fig. 12 is a flowchart illustrating an example of VMG menu formation processing;
Fig. 13 is a flowchart illustrating an example of representative-image decode preparation processing;
Fig. 14 is a flowchart illustrating an example of decode processing;
Fig. 15 is a flowchart illustrating an example of menu-encode preparation processing;
Fig. 16 is a flowchart illustrating an example of encode processing;
Fig. 17 illustrates the relationship between data recorded on a disc and the data reading, the data writing, and the seek time of a head;
Fig. 18 is a flowchart illustrating another example of VMG menu formation processing;
Fig. 19 is a flowchart illustrating an example of still image conversion processing;
Fig. 20 is a flowchart illustrating an example of still-image decode preparation processing;
Fig. 21 is a flowchart illustrating an example of decode processing;
Fig. 22 illustrates the relationship between data recorded on a disc and the data reading, the data writing, and the seek time of a head;
Fig. 23 is a flowchart illustrating another example of still image conversion processing; and
Fig. 24 is a block diagram illustrating an example of the configuration of a personal computer.

### DESCRIPTION OF THE PREFERRED EMBODIMENTS

Before describing an embodiment of the present invention, the correspondence between the features of the claims and the specific elements disclosed in an embodiment of the present invention is discussed below. This description is intended to assure that an embodiment supporting the claimed invention is described in this specification. Thus, even if an element in the following embodiment is not described as relating to a certain feature of the present invention, that does not necessarily mean that the element does not relate to that feature of the claims. Conversely, even if an element is described herein as relating to a certain feature of the claims, that does not necessarily mean that the element does not relate to other features of the claims.

Furthermore, this description should not be construed as restricting that all the aspects of the invention disclosed in the embodiment are described in the claims. That is, the description does not deny the existence of aspects of the present invention that are described in the embodiment but not claimed in the invention of this application, i.e., the existence of aspects of the present invention that in future may be claimed by a divisional application, or that may be additionally claimed through amendments.

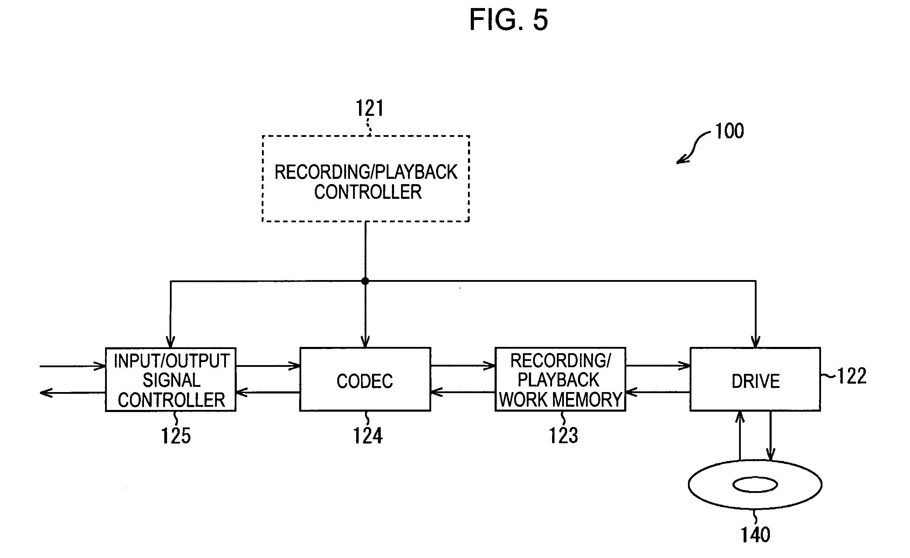

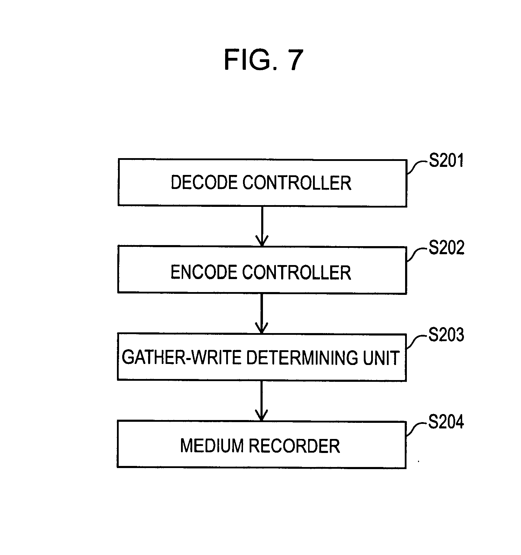

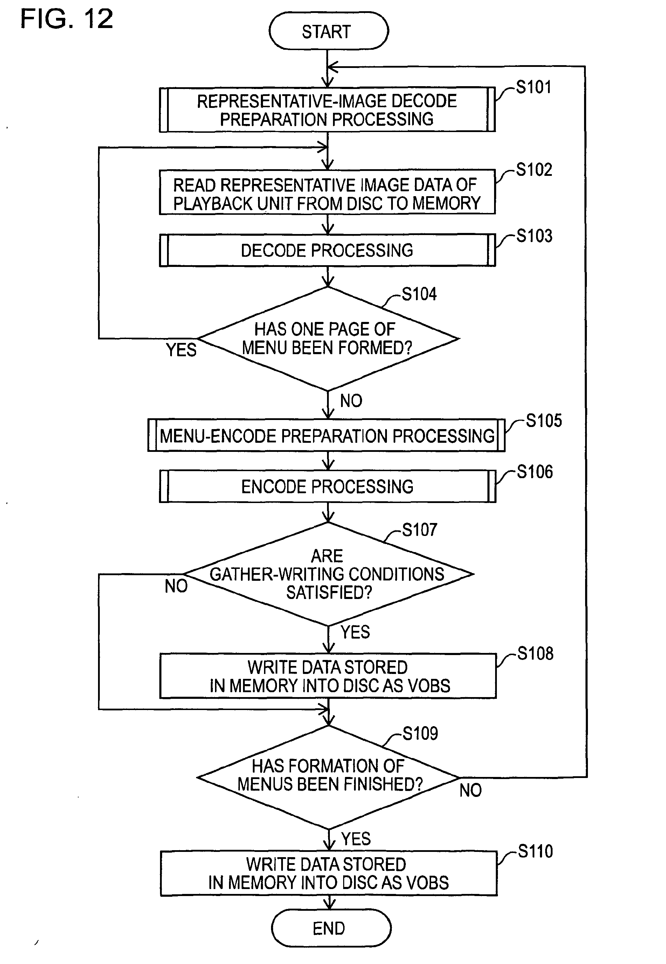

A recording apparatus (for example, a recording/playback apparatus 100 shown in Fig. 5) according to an embodiment of the present invention generates data of a menu screen for a disc (for example, a disc 140 shown in Fig. 5) on which data is recorded based on a predetermined format. The recording apparatus includes reading means (for example, a decode controller 201 shown in Fig. 7 executing step S102 in Fig. 12) for reading out, to a memory, image data of each representative image of a single or a plurality of playback units (for example, chapters) recorded on the disc and encoded by a predetermined encoding method, generating means (for example, the decode controller 201 shown in Fig. 7 executing step S103 in Fig. 12) for decoding the image data read by the reading means to generate the menu screen, encoded data storage means (for example, an encode controller 202 shown in Fig. 7 executing step S106 in Fig. 12) for encoding the menu screen generated by the generating means by a predetermined encoding method to store the encoded data in the memory, determining means (for example, a gather-write determining unit 203 shown in Fig. 7 executing step S107 in Fig. 12) for determining whether the encoded data stored in the memory by the encoded data storage means satisfies a preset condition (for example, gather-writing conditions), and disc recording means (for example, a medium recorder 204 shown in Fig. 7 executing step S108 or S110 in Fig. 12) for recording the encoded data at a position of the disc determined by the predetermined format if the determining means determines that the encoded data stored in the memory satisfies the preset condition.

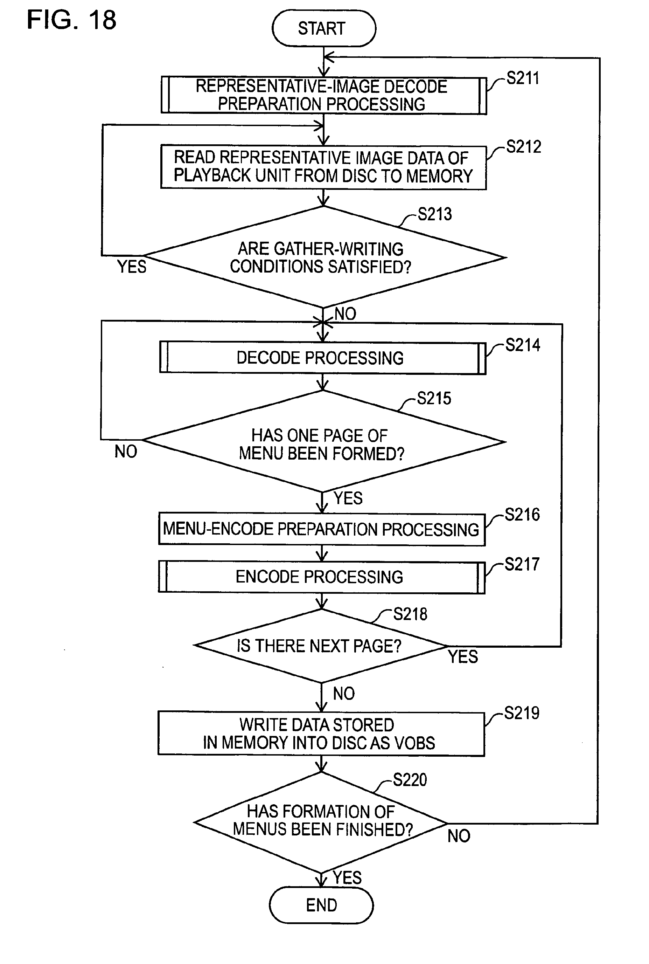

The determining means determines (for example, in step S213 in Fig. 18) whether the image data read out to the memory by the reading means satisfies a preset condition (for example, gather-writing conditions), and if the determining means determines that the image data stored in the memory satisfies the preset condition, the generating means generates the menu screen (for example, step S214 in Fig. 18), the encoded data storage means encodes the menu screen by a predetermined encoding method to store the encoded data in the memory (for example, in step S217 in Fig. 18), and the disc recording means records the encoded data at a position of the disc determined by the predetermined format (for example, in step S219 in Fig. 18).

A recording method according to an embodiment of the present invention is used for a recording apparatus (for example, the recording/playback apparatus 100 shown in Fig. 5) that generates data of a menu screen for a disc (for example, the disc 140 shown in Fig. 5) on which data is recorded based on a predetermined format. The recording method includes the steps of: reading out, to a memory, image data of each representative image of a single or a plurality of playback units (for example, chapters) recorded on the disc and encoded by a predetermined encoding method (for example, step S102 in Fig. 12), generating the menu screen by decoding the read image data (for example, step S103 in Fig. 12), encoding the generated menu screen by a predetermined encoding method to store the encoded data in the memory; (for example, step S106 in Fig. 12), determining whether the encoded data stored in the memory satisfies a preset condition (for example, gather-writing conditions) (for example, step S107 in Fig. 12), and recording the encoded data at a position of the disc determined by the predetermined format if it is determined that the encoded data stored in the memory satisfies the preset condition (for example step S108 or S110 in Fig. 12).

A program according to an embodiment of the present invention is used for a recording apparatus (for example, the recording/playback apparatus 100 shown in Fig. 5) that generates data of a menu screen for a disc (for example, the disc 140 shown in Fig. 5) on which data is recorded based on a predetermined format. The program allows a computer to execute processing includes the steps of: controlling the reading of image data of each representative image of a single or a plurality of playback units (for example, chapters) recorded on the disc and encoded by a predetermined encoding method to a memory (for example, step S102 in Fig. 12), controlling the generation of the menu screen by controlling the decoding of the read image data (for example, step S103 in Fig. 12), controlling the encoding of the generated menu screen by a predetermined encoding method to control the storage of the encoded data in the memory (for example, step S106 in Fig. 12), controlling a determination as to whether the encoded data stored in the memory satisfies a preset condition (for example, gather-writing conditions) (for example, step S107 in Fig. 12), and controlling the recording of the encoded data at a position of the disc determined by the predetermined format if it is determined that the encoded data stored in the memory satisfies the preset condition (for example, step S108 or S110 in Fig. 12).

A recording medium according to an embodiment of the present invention records a program thereon for a recording apparatus (for example, the recording/playback apparatus 100 shown in Fig. 5) that generates data of a menu screen for a disc (for example, the disc 140 shown in Fig. 5) on which data is recorded based on a predetermined format. The program allows a computer to execute processing including the steps of: controlling the reading of image data of each representative image of a single or a plurality of playback units (for example, chapters) recorded on the disc and encoded by a predetermined encoding method to a memory (for example, step S102 in Fig. 12), controlling the generation of the menu screen by controlling the decoding of the read image data (for example, step S103 in Fig. 12), controlling the encoding of the generated menu screen by a predetermined encoding method to control the storage of the encoded data in the memory (for example, step S106 in Fig. 12), controlling a determination as to whether the encoded data stored in the memory satisfies a preset condition (for example, gather-writing conditions) (for example, step S107 in Fig. 12), and controlling the recording of the encoded data at a position of the disc determined by the predetermined format if it is determined that the encoded data stored in the memory satisfies the preset condition (for example, step S108 or S110 in Fig. 12).

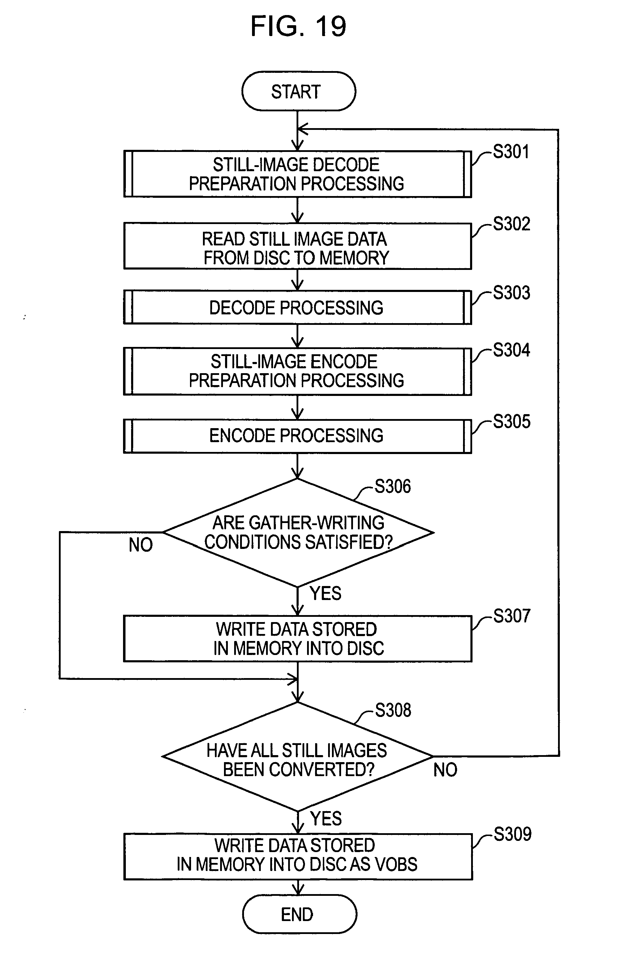

A recording apparatus (for example, the recording/playback apparatus 100 shown in Fig. 5) according to an embodiment of the present invention converts image data of a still image encoded by a first method (for example, a JPEG method) into image data encoded by a second method (for example, an MPEG method), the image data of the still image being recorded on a disc (for example, the disc 140 shown in Fig. 5) on which data is recorded based on a predetermined format. The recording apparatus includes reading means (for example, the decode controller 201 shown in Fig. 7 executing step S302 in Fig. 19) for reading out image data of a single or a plurality of still images encoded by the first method and recorded on the disc to a memory, generating means (for example, the decode controller 201 shown in Fig. 7 executing step S303 in Fig. 19) for decoding the image data read by the reading means to generate a still image screen corresponding to the image data, encoded data storage means (for example, the encode controller 202 shown in Fig. 7 executing step S305 in Fig. 19) for encoding the still image screen generated by the generating means based on the second method to store the encoded data in the memory, determining means (for example, the gather-write determining unit 203 shown in Fig. 7 executing step S306 in Fig. 19) for determining whether the encoded data stored in the memory by the encoded data storage means satisfies a preset condition (for example, gather-writing conditions), and disc recording means (for example, the medium recorder 204 shown in Fig. 7 executing step S307 or S309 in Fig. 19) for recording the encoded data at a position of the disc determined by the predetermined format if the determining means determines that the encoded data stored in the memory satisfies the preset condition.

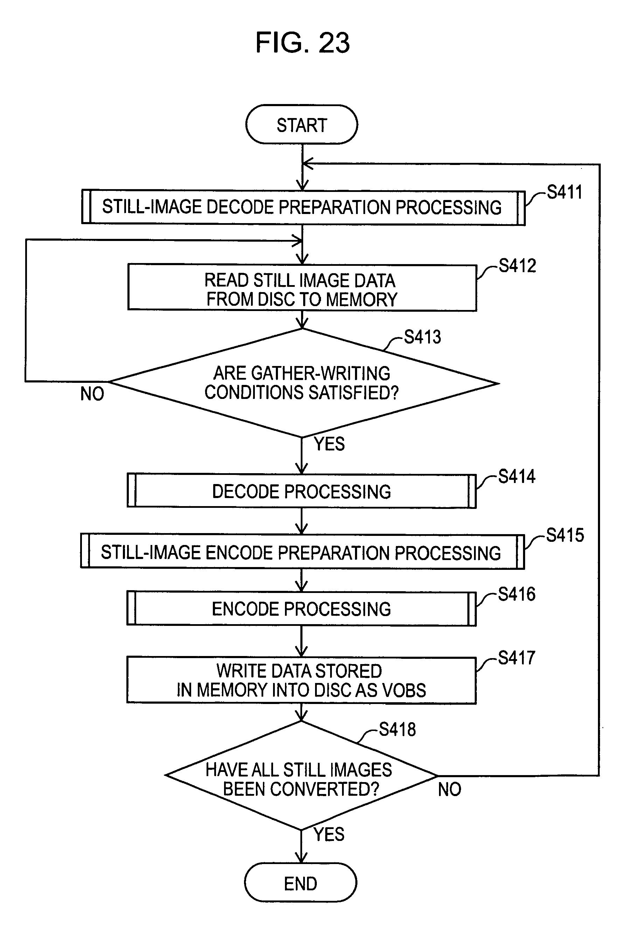

The determining means determines (for example, in step S413 in Fig. 23) whether the image data read out to the memory by the reading means satisfies a preset condition (for example, gather-writing conditions), and if the determining means determines that the image data stored in the memory satisfies the preset condition, the generating means generates the still image screen (for example, in step S414 in Fig. 23), the encoded data storage means encodes the still image screen by the second method to store the encoded data in the memory (for example, in step S416 in Fig. 23), and the disc recording means records the encoded data at a position of the disc determined by the predetermined format (for example, in step S417 in Fig. 23).

A recording method according to an embodiment of the present invention is used for a recording apparatus (for example, the recording/playback apparatus 100 shown in Fig. 5) that converts image data of a still image encoded by a first method (for example, a JPEG method) into image data encoded by a second method (for example, an MPEG method), the image data of the still image being recorded on a disc (for'example, the disc 140 shown in Fig. 5) on which data recorded is based on a predetermined format. The recording method includes the steps of: reading out image data of a single or a plurality of still images encoded by the first method and recorded on the disc to a memory (for example, step S302 in Fig. 19), generating a still image screen corresponding to the image data by decoding the read image data (for example, step S303 in Fig. 19), encoding the generated still image screen by the second method to store the encoded data in the memory (for example, step S305 in Fig. 19), determining whether the encoded data stored in the memory satisfies a preset condition (for example, gather-writing conditions) (for example, step S306 in Fig. 19), and recording the encoded data at a position of the disc determined by the predetermined format if it is determined that the encoded data stored in the memory satisfies the preset condition (for example, step S307 or S309 in Fig. 19).

A program according to an embodiment of the present invention is used for a recording apparatus (for example, the recording/playback apparatus 100 shown in Fig. 5) that converts image data of a still image encoded by a first method (for example, a JPEG method) into image data encoded by a second method (for example, an MPEG method), the image data of the still image being recorded on a disc (for example, the disc 140 shown in Fig. 5) on which data is recorded based on a predetermined format. The program allows a computer to execute processing including the steps of: controlling the reading of image data of a single or a plurality of still images encoded by the first method and recorded on the disc to a memory (for example, step S302 in Fig. 19), controlling the generation of a still image screen corresponding to the image data by controlling the decoding of the read image data (for example, step S303 in Fig. 19), controlling the encoding of the generated still image screen by the second method to control the storage of the encoded data in the memory (for example, step S305 in Fig. 19), controlling a determination as to whether the encoded data stored in the memory satisfies a preset condition (for example, gather-writing conditions) (for example, step S306 in Fig. 19), and controlling the recording of the encoded data at a position of the disc determined by the predetermined format if it is determined that the encoded data stored in the memory satisfies the preset condition (for example, step S307 or S309 in Fig. 19).

A recording medium according to an embodiment of the present invention records a program thereon for a recording apparatus (for example, the recording/playback apparatus 100 shown in Fig. 5) that converts image data of a still image encoded by a first method (for example, a JPEG method) into image data encoded by a second method (for example, an MPEG method), the image data of the still image being recorded on a disc (for example, the disc 140 shown in Fig. 5) on which data is recorded based on a predetermined format. The program allows a computer to execute processing including the steps of: controlling the reading of image data of a single or a plurality of still images encoded by the first method and recorded on the disc to a memory (for example, step S302 in Fig. 19), controlling the generation of a still image screen corresponding to the image data by controlling the decoding of the read image data (for example, step S303 in Fig. 19), controlling the encoding of the generated still image screen by the second method to control the storage of the encoded data in the memory (for example, step S305 in Fig. 19), controlling a determination as to whether the encoded data stored in the memory satisfies a preset condition (for example, gather-writing conditions) (for example, step S306 in Fig. 19), and controlling the recording of the encoded data at a position of the disc determined by the predetermined format if it is determined that the encoded data stored in the memory satisfies the preset condition (for example, step S307 or S309 in Fig. 19).

An embodiment of the present invention is described below with reference to the accompanying drawings.

Fig. 5 is a block diagram illustrating the configuration of a recording/playback apparatus (may be a recording apparatus) 100 according to an embodiment of the present invention. The recording/playback apparatus 100 may be a DVD recorder/player or a DVD camcorder.

In Fig. 5, a recording/playback controller 121 receives an operation input from a user, and also controls the individual elements forming the recording/playback apparatus 100 based on an instruction input from the user.

A drive 122 reads data from a disc 140, such as a DVD, which serves as a recording medium installed in the drive 122, and writes data into the disc 140.

A recording/playback work memory 123 is formed as a rewritable semiconductor memory, such as a random access memory (RAM) or an electrically erasable and programmable read only memory (EEPROM), and temporarily stores data read or written from or into the disc 140 via the drive 122.

A codec 124 codes or decodes data input from the recording/playback work memory 123 or an input/output signal controller 125. The operation mode of the codec 124 is set to be mode A, mode B, or mode C under the control of the recording/playback controller 121.

In mode A, the codec 124 decodes image data which is compressed with, for example, an MPEG method, and which is read out from the disc 140 and stored in the recording/playback work memory 123 by the drive 122 to play back the image data. The codec 124 then outputs the played back image data (baseband image data) to the input/output signal controller 125.

In mode B, the codec 124 compresses image data of a baseband image supplied from the input/output signal controller 125 according to, for example, an MPEG method, to encode the image data, and outputs the encoded image data to the recording/playback work memory 123.

In mode C, the codec 124 decodes image data which is compressed with, for example, a JPEG method, and which is read out from the disc 140 and stored in the recording/playback work memory 123 by the drive 122 to play back the image data. The codec 124 then outputs the played back image data (baseband image data) to the input/output signal controller 125.

The input/output signal controller 125 outputs a signal corresponding to the baseband image data supplied from the codec 124 to an external display device. The input/output signal controller 125 also captures a signal displayed on an external display device and outputs the captured signal to the codec 124 as the baseband image data. The operation of the input/output signal controller 125 is switched under the control of the recording/playback controller 121.

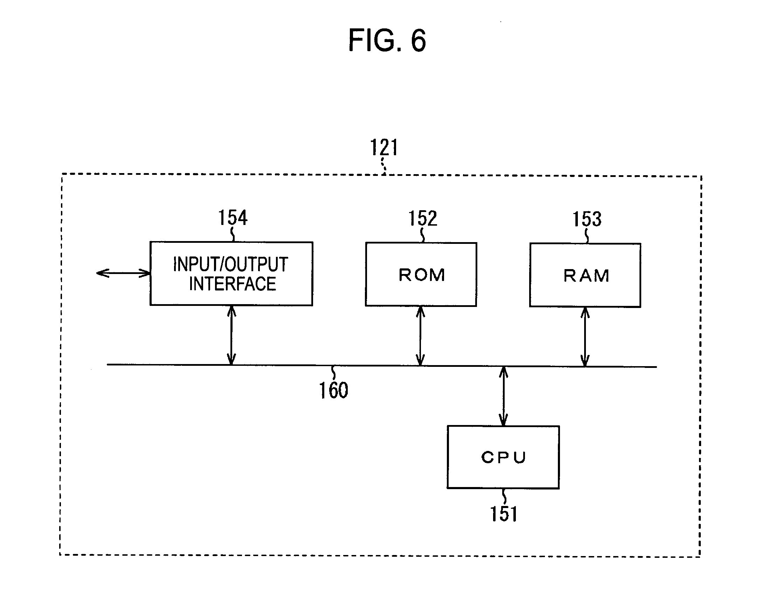

Fig. 6 is a block diagram illustrating an example of the detailed configuration of the recording/playback controller 121. A central processing unit (CPU) 151 executes various processing jobs according to programs stored in a ROM 152. In a RAM 153, programs and data executed by the CPU 151 are stored. The CPU 151, the ROM 152, and the RAM 153 are connected to each other via a bus 160.

An input/output interface 154 is connected to the bus 160, and an input unit, such as a keyboard and a mouse, and an output unit, such as a display, are connected to the input/output interface 154. Commands input by operating the input unit are supplied to the CPU 151, and the CPU 151 executes various processing jobs based on the commands and outputs images generated by the processing to the output unit.

Fig. 7 is a block diagram illustrating an example of the functional configuration of software executed by the CPU 151 shown in Fig. 6.

A decode controller 201 controls the codec 124 to play back image data compressed by an MPEG method or image data compressed by a JPEG method by decoding the image data, and also controls the input/output signal controller 125 to output the played back image data.

An encode controller 202 controls the codec 124 to encode (compression-encode) baseband image data by an MPEG method, and also controls the input/output signal controller 125 to capture baseband images.

A gather-write determining unit 203 determines whether data stored in the recording/playback work memory 123 has reached a preset recording unit, for example, a predetermined number of screens. Based on the determination result, the gather-write determining unit 203 decides a time when menu screen data or converted still image data stored in the recording/playback work memory 123 is written into the disc 140. The gather-write determining unit 203 also manages the amount of data stored in the recording/playback work memory 123.

A medium recorder 204 controls the drive 122 to record data supplied from the recording/playback work memory 123 on the disc 140 in a data format, for example, a DVD video format.

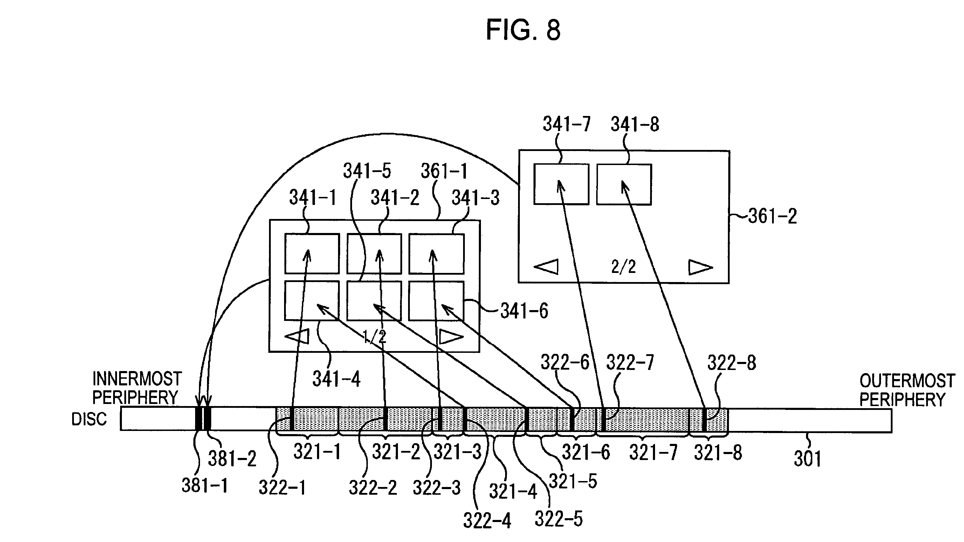

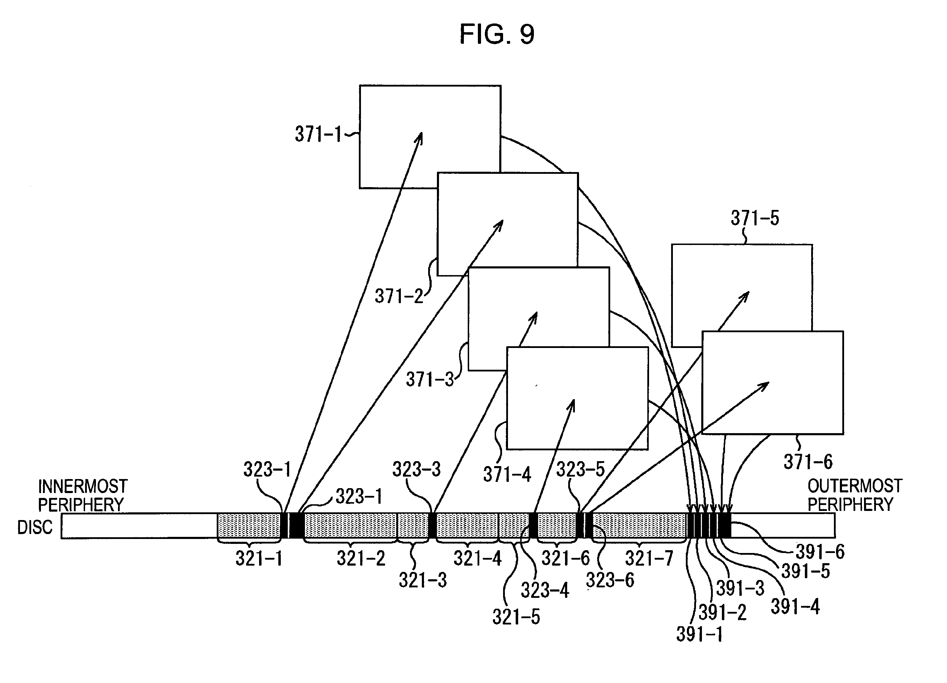

The VMG menu formation and still image conversion performed by the recording/playback apparatus 100 is described below with reference to Figs. 8 and 9.

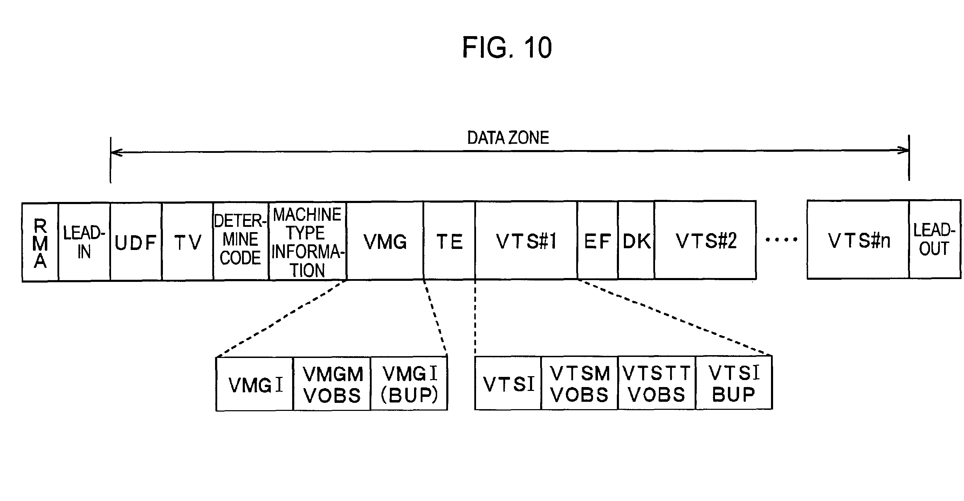

To play back data recorded on the disc (DVD) 140 by a playback-only DVD player, the recording/playback apparatus 100 performs finalizing processing for converting the data recorded on the disc 140 into a data format compatible with a playback-only DVD-ROM. The data format that can be played back by a playback-only DVD player is, for example, a DVD video format. Details of the DVD video format are given below with reference to Fig. 10.

When performing finalizing, as shown in Fig. 8, a VMG menu screen, which is a menu screen to be displayed when data is played back in a DVD player, is also generated.

Disc data 301 recorded on the disc 140 includes VMG menu screens 361-1 and 361-2 shown in Fig. 8, which are moving picture data compressed by, for example, an MPEG2, and are generated based on representative images of chapters, which serve as the playback units. In the disc data 301, the data recording positions from data recorded on the inner periphery to data recorded on the outer periphery of the disc 140 are indicated from the left side to the right side in Fig. 8. In this example, each VMG menu screen includes representative images up to 6 images, and 6 representative images 341-1 through 341-6 are indicated in the VMG menu screen 361-1 and two representative images 341-7 and 341-8 are indicated in the VMG menu screen 361-2.

In this example, 8 chapters 321-1 through 321-8 are recorded on the disc 140 (disc data 301), and each chapter includes image data (for example, MPEG I-pictures), which serves as a representative image selected by a predetermined method. Representative image data 322-1 through 322-8 are included in the data 301 in association with the chapters 321-1 through 321-8, respectively.

The recording/playback apparatus 100 sequentially reads and plays back the representative image data 322-1 through 322-8, and pastes the played back representative image data on a background image of a VMG menu screen, thereby generating the VMG menu screens 361-1 and 361-2. Then, the recording/playback apparatus 100 converts (encodes) the image data of the VMG menu screens 361-1 and 361-2 into, for example, MPEG I-picture data, and records the encoded image data at preset positions of the inner periphery of the disc 140 as data 381-1 and 381-2, which are VOBS data.

Meanwhile, the still image conversion by the recording/playback apparatus 100 is performed, as shown in Fig. 9. In Fig. 9, still image data 323-1 through 323-6 are recorded together with 7 chapters, such as the chapters 321-1 through 321-7 on the disc 140 (disc data 301). The still image data 323-1 through 323-6 are, for example, JPEG-compressed image data, and cannot be played back by a playback-only DVD player.

Accordingly, when performing finalizing, the recording/playback apparatus 100 converts the image data 323-1 through 323-6 to MPEG-compressed image data so that they can be played back in a playback-only DVD player.

The recording/playback apparatus 100 sequentially reads the image data 323-1 through 323-6 and plays them back to generate still image screens 371-1 through 371-6, respectively, based on the played back still images. The recording/playback apparatus 100 then converts (encodes) the generated still image screens 371-1 through 371-6 into MPEG I-picture data and records the encoded data at positions after the recording position of the chapter 321-7 of the disc 140 (outer periphery) as data 391-1 through 391-6, respectively.

Fig. 10 illustrates an example of the detailed logical format configuration of the disc 140 in the DVD video format. In the disc 140, the information recording surface is divided, starting from the innermost periphery, which is the leading portion, into a lead-in zone, a data zone, and a lead-out zone, and desired image data and audio data are recorded in the data zone.

The data zone is divided into, starting from the lead-in zone, a universal disk format (UDF) area (file system area), management table television area (indicated by TV in Fig. 10), a determine code area, machine type information, a VMG area (DVD management information area), an extended-file guidance information TE area (indicated by TE in Fig. 10), and video/audio data recording areas (from VTS#1 to VTS#n). The UDF area, the management table television area, the VMG area, and the extended-file guidance information TE area are management information recording areas that manage files formed by the data recorded on the disc 140.

The VMG area is an area in which DVD management information is recorded, and more specifically, a table of content (TOC) information, which is management information for managing the overall image data recorded in the video/audio data recording areas, is recorded. In contrast, the UDF area is an area corresponding to a computer file management system, in which management information for managing the overall data recorded in the video/audio data recording areas by a format compatible with the computer file system is recorded.

In the VMG, VMGI, VMGM VOBS, and VMGI BUP are sequentially disposed in that order. In the VMGI, control information concerning the overall video zones of the DVD is recorded. In the VMGM VOBS, information related to a menu for selecting a playback unit, such as a title or a chapter, is recorded. In the VMGI BUP, the same information as the VMGI is recorded as backup data.

For example, the data 381-1 and 381-2 shown in Fig. 8 are recorded as menu screen data of VMGM VOBS, and when accessing the disc 140 (playing back the data recorded on the disc 140) by a DVD player, a desired moving picture file can be searched for and played back by the VMG. For example, when playing back the disc 140 by a DVD player (playback-only player), the DVD player accesses the VMG of the disc 140 so that the VMG menu screens 361-1 and 361-2 shown in Fig. 8 can be displayed. Then, a user specifies one of the representative images 341-1 through 341-8 to play back the chapter corresponding to the selected representative image.

The video/audio data recording areas are program areas recording real data therein. For example, image data (for example, MPEG moving picture data (video/audio data)) including a plurality of chapters are recorded in units of video title sets (VTSs). Additionally, after VTS, a still image file EF (for example, JPEG still image data), which is an extended file, and intermediate management information DK are recorded. The extended file EF and the intermediate management information DK can specify the position of the extended file EF to play back the extended file EF.

The VTS includes video title set information (VTSI), video object set for the VTSM (VTSM VOBS), video object set for titles in a VTS (VTSTT VOBS), and backup of VTSI (VTSI BUP) in that order. In the VTSTT VOBS, real data, for example, MPEG image data, is recorded. In the VTSI, recording position information, which is management information for managing the real data, such as image data, is recorded. In the VTSM VOBS, a title menu of video data is recorded.

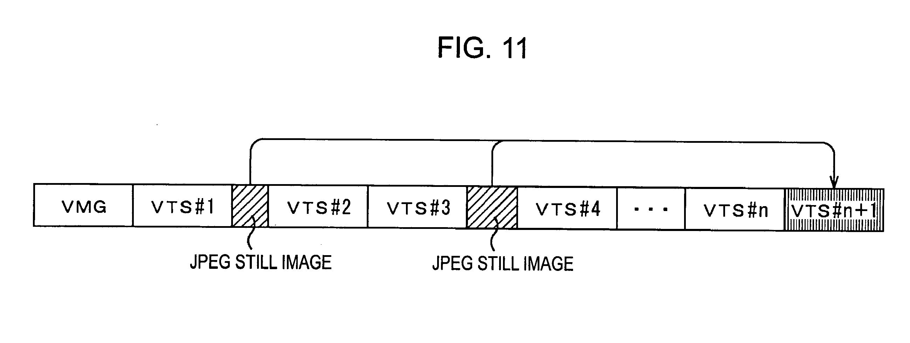

Still image data, for example, JPEG image data, (such as image data 323-1 through 323-6 shown in Fig. 9) are recorded between VTSs, as shown in Fig. 11. In the example in Fig. 11, JPEG still image data are recorded between VTS#1 and VTS#2 and between VTS#3 and VTS#4. Such still image data are converted into, for example, MPEG image data (such as data 391-1 through 391-6 shown in Fig. 9) by the still image conversion processing by the recording/playback apparatus 100, and are recorded as new VTS data, i.e., VTS#n+1, at a position after the final VTS#n recorded on the disc 140.

The VMG menu formation processing by the recording/playback apparatus 100 is described below with reference to the flowchart in Fig. 12. As stated above, this processing is executed when performing the finalizing processing on the disc 140.

In step S101, the decode controller 201 performs representative-image decode preparation processing.

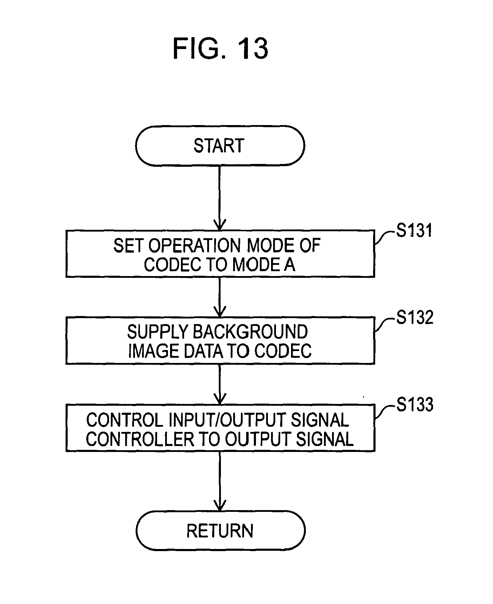

Details of the representative-image decode preparation processing in step S101 are discussed below with reference to the flowchart in Fig. 13.

In step S131, the decode controller 201 sets the operation mode of the codec 124 to be mode A. As stated above, in mode A, the codec 124 decodes MPEG image data read from the disc 140 and stored in the recording/playback work memory 123 by the drive 122 to play back the MPEG image, and outputs the played back image data (baseband image data) to the input/output signal controller 125.

Then, in step S132, the decode controller 201 supplies the image data, which serves as the background of the VMG menu screen, to the codec 124. For example, in the menu screen 361-1 or 361-2 in Fig. 8, an image portion other than the representative images 341-1 through 341-8, for example, image data corresponding to a graphical user interface (GUI) including buttons for selecting chapters to be played back, is supplied as the background of the VMG menu screen. As the backgrounds of VMG menu screens, the predetermined image data are stored in the ROM 152 in advance and are read as necessary.

In step S133, the decode controller 201 controls the input/output signal controller 125 to output the signal corresponding to the baseband image data supplied from the codec 124 to, for example, an external display device.

The representative-image decode preparation processing is then completed.

Referring back to Fig. 12, in step S102, the decode controller 201 controls the drive 122 to read representative image data of one playback unit (for example, one chapter) from the disc 140 to the recording/playback work memory 123.

Then, in step S103, the decode controller 201 performs decode processing.

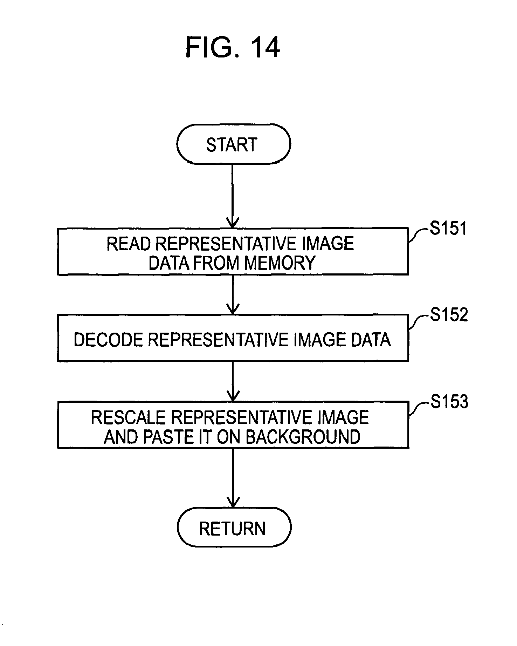

Details of the decode processing in step S103 are discussed below with reference to the flowchart in Fig. 14.

In step S151, the decode controller 201 reads the representative image data stored in the recording/playback work memory 123 in step S102 and supplies the read representative image data to the codec 124.

In step S152, the decode controller 201 controls the codec 124 to decode the representative image data read in step S151. Thus, the MPEG-compressed representative image data can be decoded.

In step S153, the decode controller 201 controls the codec 124 to rescale (reduce the size of) the representative image data decoded in step S152 and pastes the rescaled image data to the background image of the VMG menu screen supplied in step S132.

According to the VMG menu formation processing so far, in the VMG menu screen 361-1 shown in Fig. 8, for example, the representative image 341-1 is pasted on the background.

Referring back to Fig. 12, in step S104, the decode controller 201 determines whether one page of the menu has been generated. In this case, in the VMG menu screen 361-1, the representative images 341-2 through 341-6 have not been pasted on the background. Accordingly, it is determined in step S104 that one page of the menu has not been generated, and the process returns to step S102.

Then, steps S102 through S104 are repeated, and the representative images 341-2 through 341-6 are sequentially pasted on the background of the VMG menu screen 361-1. Then, when the representative image 341-6 is pasted, i.e., all the six representative images have been pasted, it is determined in step S104 that one page of the menu has been generated, and the process proceeds to step S105. If the number of representative images to be pasted on the background is less than six, it is determined in step S104 that one page of the menu has been generated when the final representative image is pasted on the background.

In step S105, the encode controller 202 executes menu-encode preparation processing.

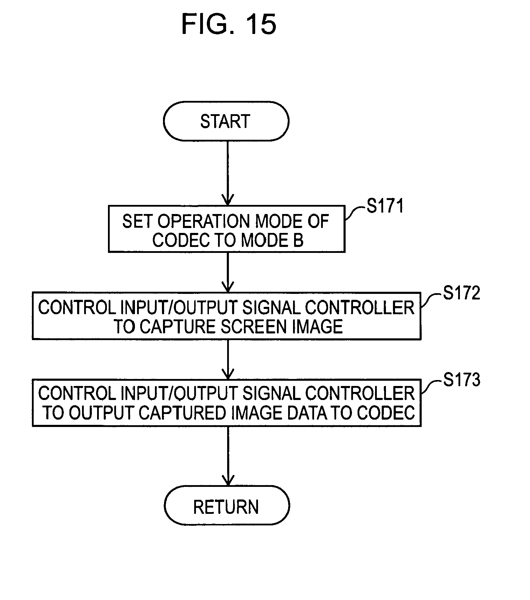

Details of the menu-encode preparation processing in step S105 are discussed below with reference to the flowchart in Fig. 15.

In step S171, the encode controller 202 sets the operation mode of the codec 124 to be mode B. As stated above, in mode B, the codec 124 compresses baseband image data supplied from the input/output signal controller 125 according to an MPEG method to encode the baseband image data, and then outputs the encoded data to the recording/playback work memory 123.

In step S172, the encode controller 202 controls the input/output signal controller 125 to capture a screen signal input into the input/output signal controller 125. As a result, for example, the VMG menu screen 361-1 is captured.

In step S173, the encode controller 202 controls the input/output signal controller 125 to output the screen image data captured in step S172 to the codec 124. As a result, for example, the baseband image data of the VMG menu screen 361-1 is supplied to the codec 124.

The menu-encode preparation processing is then completed.

Referring back to Fig. 12, in step S106, the encode controller 202 performs encode processing.

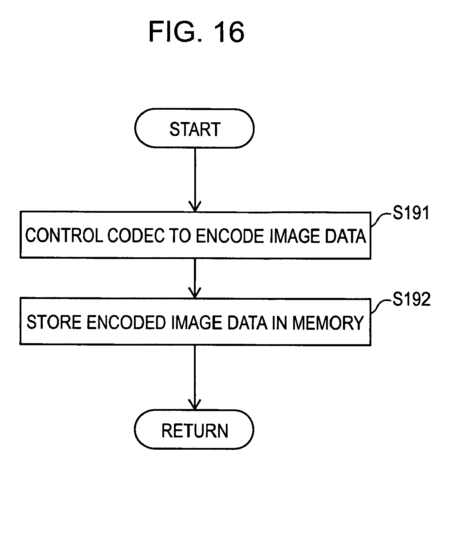

Details of the encode processing in step S106 are discussed below with reference to the flowchart in Fig. 16.

In step S191, the encode controller 202 controls the codec 124 to encode the image data supplied in step S173. As a result, the baseband image data of, for example, the VMG menu screen 361-1 is encoded into MPEG I-picture data.

In step S192, the encode controller 202 outputs the data encoded in step S191 to the recording/playback work memory 123 and stores it therein.

According to the VMG menu formation processing so far, between the VMG menu screens 361-1 and 361-2 shown in Fig. 8, the data 381-1, which is the VOBS data corresponding to the VMG menu screen 361-1, is generated. At this point, the data 381-1 is not yet recorded (written) in the disc 140.

Referring back to Fig. 12, in step S107, the gather-write determining unit 203 determines whether gather-writing conditions are satisfied. The gather-writing conditions are conditions for determining whether the data stored in the recording/playback work memory 123 is to be recorded on the disc 140, for example, the condition that data for a predetermined number of VMG menu screens (for example, 10 screens) are stored in the recording/playback work memory 123. Alternatively, the gather-writing conditions may be such that a predetermined ratio (for example, 60 %) of the total capacity of the recording/playback work memory 123 has been used. The gather-writing conditions are prestored in, for example, the ROM 152, and are read as necessary.

In this case, since data (data 381-1) corresponding to only one VMG menu screen has been generated, it is determined in step S107 that the gather-writing conditions are not satisfied. The process then proceeds to step S109 by skipping step S108.

In step S109, it is determined whether the formation of the menus has been finished. If, for example, VMG menu screen data corresponding to all representative images recorded on the disc 140 are generated, it is determined in step S109 that the formation of the menus has been finished. In this case, VMG menu screen data (VMG menu screen 361-2) corresponding to the representative images 341-7 and 341-8 shown in Fig. 8 is not generated, it is determined in step S109 that the formation of the menus has not been finished, and the process returns to step S101.

Thereafter, steps S101 through S106 are repeated so that the data (for example, data 381-2) of the VMG menu screen 361-2 is generated. Then, it is determined in step S107 that the gather-writing conditions are not satisfied, and the process proceeds to step S109. However, since the VMG image screen data corresponding to all the representative images recorded on the disc 140 are generated, it is determined in step S109 that the formation of the menus has been finished. The process then proceeds to step S110.

In step S110, the medium recorder 204 controls the drive 122 to write the data stored in the recording/playback work memory 123 into the disc 140 as VOBS data. As a result, the data 381-1 and 381-2, which are VOBS data corresponding to the VMG menu screens 361-1 and 361-2, are recorded at the recording position of the VMGM VOBS shown in Fig. 10 and at the preset recording positions of the inner periphery of the disc 140, as shown in Fig. 8.

If it is determined in step S107 that the gather-writing conditions are satisfied, the process proceeds to step S108. In step S108, the medium recorder 204 controls the drive 122 to write data stored in the recording/playback work memory 123 into the disc 140 as VOBS data, as in step S110.

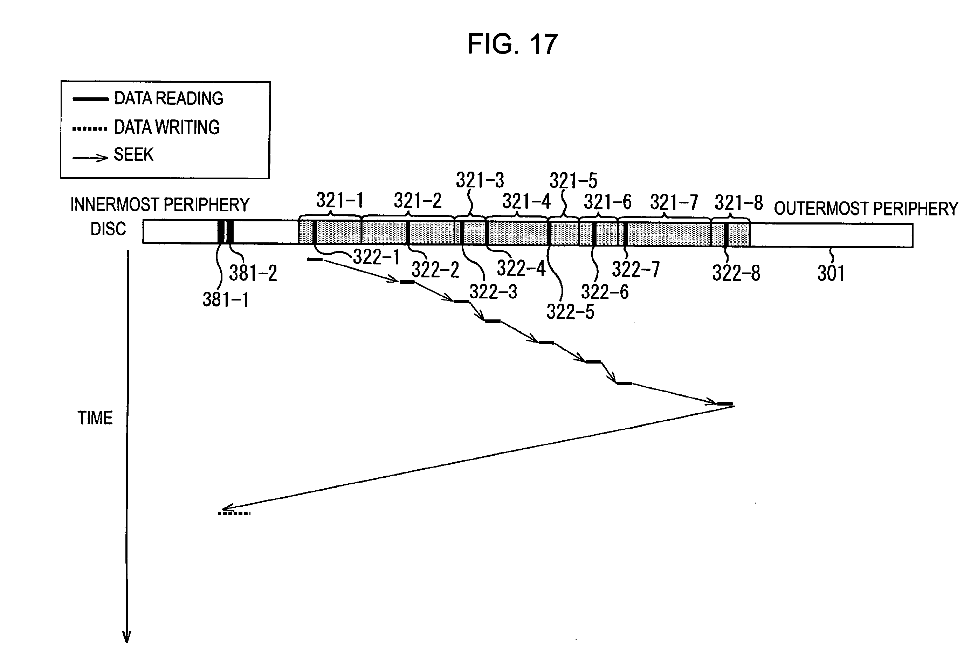

The VMG menu formation processing has thus been executed. The relationship between the disc data 301 recorded on the disc 140 and the data reading time, the data writing time, and the seek time of the head of the recording/playback apparatus 100 (drive 122) is shown in Fig. 17. In Fig. 17, in the disc data 301, the data recording positions from data recorded at the inner periphery of the disc 140 to data recorded at the outer periphery thereof are indicated from the left side to the right side in Fig. 17. In Fig. 17, the vertical axis represents the time axis, and the time elapses from the top to the bottom in Fig. 17. The data configuration of the disc data 301 is similar to that discussed with reference to Fig. 8.

In Fig. 17, the reading of data from the disc 140 is indicated by the solid lines, the writing of data into the disc 140 is designated by the broken lines, and the seek operation of the head is indicated by the arrows. More specifically, by repeating steps S102 and S103 in Fig. 12, the representative image data 322-1, 322-2, and so on, of the chapters 321-1, 321-2, and so on, are sequentially read from the disc 140 and are decoded. In this case, while reading the representative image data, the head moves (seeks) from the recording position of the representative image data 322-1 to the recording position of the representative image data 322-2, from the recording position of the representative image data 322-2 to the recording position of the representative image data 322-3, and so on.

In the above-described VMG menu formation processing discussed with reference to Fig. 12, it is determined in step S107 whether the gather-writing conditions are satisfied before recording the VOBS data 381-1 and 381-2 associated with the VMG menu screens 361-1 and 361-2, respectively. Accordingly, unlike known finalizing processing performed by a recording/playback apparatus, after reading the image data 321-6, which is the final representative image of the VMG menu screen 361-1, it is not necessary that the head move from the outer periphery to the inner periphery of the disc 140 to record the data 381-1. Instead, after reading the data 321-8, which is the final representative image data of the VMG menu screen 361-2, the head moves from the outer periphery to the inner periphery of the disc 140 to record the data 381-1 and 381-2.

That is, according to the VMG menu formation processing shown in Fig. 12 by the recording/playback apparatus 100, the occurrences of seek operations (from the inner periphery to the outer periphery or from the outer periphery to the inner periphery of the disc 140) accompanying the writing of data on the disc 140 can be reduced. Thus, the time for finalizing processing can be considerably reduced.

In the example shown in Fig. 12, after generating the encoded VMG menu screen data, it is determined whether the gather-writing conditions are satisfied. Alternatively, it may be determined whether the gather-writing conditions are satisfied after immediately reading representative image data and before encoding the VMG menu screen data. An example of such VMG menu formation processing is described below with reference to the flowchart in Fig. 18.

In Fig. 18, steps S211 and S212 are similar to steps S101 and S102, respectively, in Fig. 12.

After step S212, it is determined in step S213 whether the gather-writing conditions are satisfied. The gather-writing conditions include, for example, the condition that data for a predetermined number of VMG menu screens (for example, 10 screens) are stored in the recording/playback work memory 123 as a result of step S212. Alternatively, the gather-writing conditions may be such that a predetermined ratio (for example, 60 %) of the total capacity of the recording/playback work memory 123 has been used. When the final representative image is read, it is determined in step S213 that the gather-writing conditions are satisfied.

If it is determined in step S213 that the gather-writing conditions are not satisfied, the process returns to step S212. That is, step S212 is repeated until the image data 322-8 is read.

Steps S214 through S217 are similar to steps S103 through S106, respectively, in Fig. 12. It is then determined in step S218 whether there is a next page (next VMG menu screen). If there is a next page, steps S214 through S217 are repeated so that the VOBS data 381-1 and 381-2 associated with the VMG menu screens 361-1 and 361-2 are generated.

Steps S219 and S220 are similar to steps S108 and S109, respectively, in Fig. 12.

In this manner, in the VMG menu formation processing shown in Fig. 18 as well as the processing shown in Fig. 12, the occurrences of seek operations from the outer periphery to the inner periphery of a disc can be reduced, thereby significantly decreasing the time for finalizing processing.

The above-described VMG menu formation processing is executed when performing finalizing processing. However, it is not necessary that the above-described VMG menu formation processing be executed when performing finalizing processing. Additionally, a menu screen to be formed is not restricted to a VMG menu screen.

A description is now given, with reference to the flowchart in Fig. 19, of still-image conversion processing performed by the recording/playback apparatus 100. As stated above, this processing is executed when performing finalizing processing on the disc 140.

In step S301, the decode controller 201 performs still-image decode preparation processing.

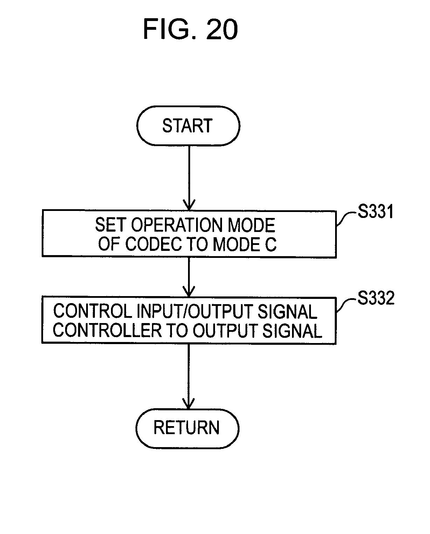

Details of the still-image decode preparation processing in step S301 are discussed below with reference to the flowchart in Fig. 20.

In step S331, the decode controller 201 sets the operation mode of the codec 124 to mode C. As stated above, in mode C, the codec 124 decodes JPEG image data read from the disc 140 and stored in the recording/playback work memory 123 by the drive 122 to play back the image data, and outputs the played back image data (baseband image data) to the input/output signal controller 125.

In step S332, the decode controller 201 controls the input/output signal controller 125 to output the signal corresponding to the baseband image data supplied from the codec 124 to an external display device.

The still-image decode preparation processing has thus been executed.

Referring back to Fig. 19, in step S302, the decode controller 201 controls the drive 122 to read image data associated with one still image from the disc 140 to the recording/playback work memory 123.

In step S303, the decode controller 201 performs decode processing.

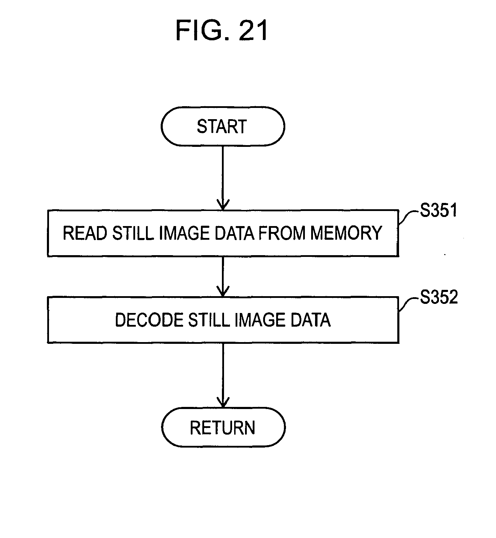

Details of the decode processing in step S303 are discussed below with reference to the flowchart in Fig. 21.

In step S351, the decode controller 201 reads out the still image data stored in the recording/playback work memory 123 in step S302 to the codec 124.

In step S352, the decode controller 201 controls the codec 124 to decode the still image data read in step S351. Accordingly, the image data of, for example, a JPEG still image, is decoded.

According to the still-image conversion processing so far, the still image screen 371-1 is generated based on the image data 323-1 shown in Fig. 9.

Referring back to Fig. 19, in step S304, the encode controller 202 executes still-image encode preparation processing. The still-image encode preparation processing in step S304 is similar to the encode preparation processing discussed with reference to the flowchart in Fig. 15, and a detailed explanation thereof is thus omitted. According to the encode processing, the baseband signal image data associated with the still image screen 371-1 is supplied to the codec 124.

Then, in step S305, the encode controller 202 executes encode processing. The encode processing in step S305 is similar to that discussed with reference to Fig. 16, and an explanation thereof is thus omitted. According to the encode processing, the baseband image data associated with, for example, the still image screen 371-1, is encoded into MPEG I-pictures. The encoded image data is then stored in the recording/playback work memory 123.

According to the still-image conversion processing so far, the still image data 391-1 shown in Fig. 9 is generated. At this point, the still image data 391-1 is not yet recorded (written) in the disc 140.

The gather-write determining unit 203 then determines in step S306 whether the gather-writing conditions are satisfied. The gather-writing conditions are conditions for determining whether the data stored in the recording/playback work memory 123 is to be recorded on the disc 140, for example, the condition that data for a predetermined number of still-image screens (for example, 10 screens) are stored in the recording/playback work memory 123. Alternatively, the gather-writing conditions may be such that a predetermined ratio (for example, 60 %) of the total capacity of the recording/playback work memory 123 has been used. The gather-writing conditions are prestored in, for example, the ROM 152, and are read as necessary.

In this case, since data (data 391-1) corresponding to only one still image screen has been generated, it is determined in step S306 that the gather-writing conditions are not satisfied. The process then proceeds to step S308 by skipping step S307.

It is then determined in step S308 whether all still images have been converted. For example, if still image screen data associated with all the still image data recorded in the disc 140 have been generated, it is determined in step S308 that all still images have been converted. At this point, since the still image screens 371-2 through 371-6 corresponding to the image data 323-2 through 323-6, respectively, are not generated, it is determined in step S308 that not all still images have been converted, and the process returns to step S301.

Thereafter, by repeating steps S301 through S305, the data 391-2 through 391-6 of the still image screens 371-2 through 371-6, respectively, are generated. It is then determined in step S306 that the gather-writing conditions are not satisfied, and the process proceeds to step S308. However, since the still image screen data associated with all the still image data recorded on the disc 140 have been generated, it is determined in step S308 that all the still images have been converted, and the process proceeds to step S309.

In step S309, the medium recorder 204 controls the drive 122 to write the data stored in the recording/playback work memory 123 into the disc 140 as the converted still image data. As a result, the data 391-1 through 391-6 converted from the image data 323-1 through 323-6 and corresponding to the still image screens 371-1 through 371-6, respectively, are recorded, as discussed above with reference to Fig. 9, at a recording position of VTS#n+1 shown in Fig. 11 after the chapter 321-7 at the outer periphery of the disc 140.

If it is determined in step S306 that the gather-writing conditions are satisfied, the process proceeds to step S307. In step S307, the medium recorder 204 controls the drive 122 to write the data stored in the recording/playback work memory 123 into the disc 140 as the converted still image data, as in step S309.

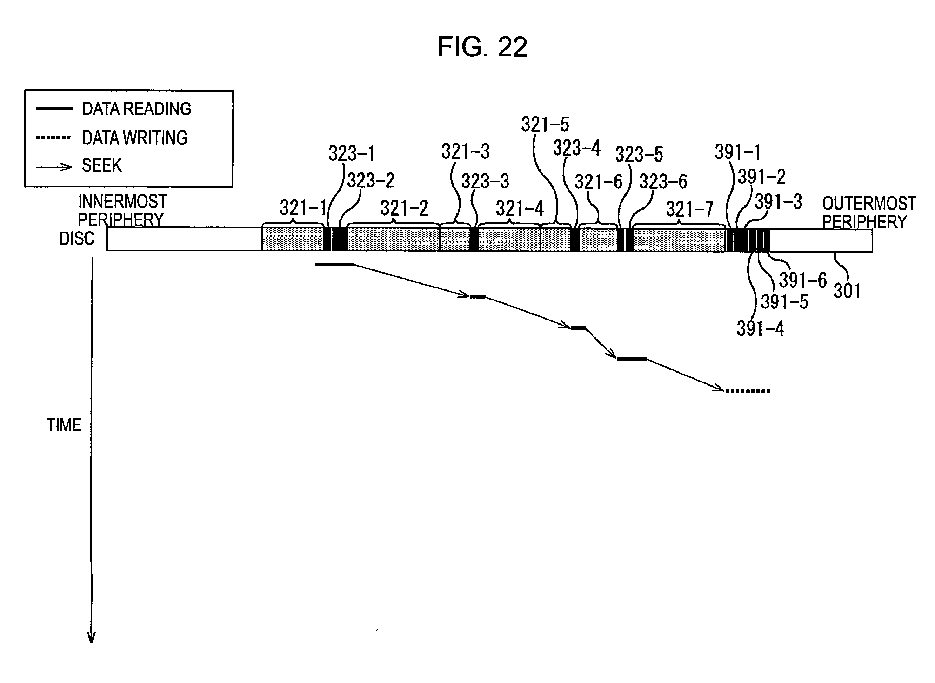

The still image conversion processing has thus been executed. The relationship between the disc data 301 recorded on the disc 140 and the data reading time, the data writing time, and the seek time of the head of the recording/playback apparatus 100 (drive 122) when performing the still image conversion processing shown in Fig. 19 is shown in Fig. 22. In Fig. 22, in the disc data 301, the data recording positions from data recorded at the inner periphery of the disc 140 to data recorded at the outer periphery thereof are indicated from the left side to the right side in Fig. 22. In Fig. 22, the vertical axis represents the time axis, and the time elapses from the top to the bottom in Fig. 22. The data configuration of the disc data 301 is similar to that discussed with reference to Fig. 9.

In Fig. 22, the reading of data from the disc 140 is indicated by the solid lines, the writing of data into the disc 140 is designated by the broken lines, and the seek operation of the head is indicated by the arrows. More specifically, by repeating step S302 in Fig. 19, the still image data 323-1, 323-2, and so on, are sequentially read from the disc 140. In this case, while reading the still image data, the head moves (seeks) from the recording position of the image data 323-1 to the recording position of the image data 323-2, from the recording position of the image data 323-2 to the recording position of the image data 323-3, and so on.

In the above-described still image conversion processing discussed with reference to Fig. 19, it is determined in step S306 whether the gather-writing conditions are satisfied before recording the converted still image data 391-1 through 391-6 on the disc 140. Accordingly, unlike known finalizing processing performed by a recording/playback apparatus, after reading each of the image data 323-1, 323-3, and so on, it is not necessary that the head move from the inner periphery to the outer periphery of the disc 140 to record the data 391-1, 391-2, and so on. Instead, after reading the data 323-6, which is the final still image data, the head moves from the inner periphery to the outer periphery of the disc 140 to record the data 391-1 through 391-6 together.

That is, according to the still image conversion processing shown in Fig. 19 by the recording/playback apparatus 100, the occurrences of seek operations (from the inner periphery to the outer periphery or from the outer periphery to the inner periphery of the disc 140) accompanying the writing of data on the disc 140 can be reduced. Thus, the time for finalizing processing can be considerably decreased.

In the example shown in Fig. 19, after generating the encoded still image screen data, it is determined whether the gather-writing conditions are satisfied. Alternatively, it may be determined whether the gather-writing conditions are satisfied after immediately reading still image data and before encoding the still image data. An example of such still image conversion processing is described below with reference to the flowchart in Fig. 23.

In Fig. 23, steps S411 and S412 are similar to steps S301 and S302, respectively, in Fig. 19.

After step S412, it is determined in step S413 whether the gather-writing conditions are satisfied. The gather-writing conditions include, for example, the condition that data for a predetermined number of still image data (for example, 10 screens) are stored in the recording/playback work memory 123 as a result of step S412. Alternatively, the gather-writing conditions may be such that a predetermined ratio (for example, 60 %) of the total capacity of the recording/playback work memory 123 has been used. When the final still image is read, it is determined in step S413 that the gather-writing conditions are satisfied.

If it is determined in step S413 that the gather-writing conditions are not satisfied, the process returns to step S412. That is, step S412 is repeated until the image data 323-6 is read.

Steps S414 through S416 are similar to steps S303 through S305, respectively, in Fig. 19. Then, the data 391-1 through 391-6 associated with the still image screens 371-1 through 371-6, respectively, are generated.

Steps S417 and S418 are similar to steps S307 and S308, respectively, in Fig. 19.

In this manner, in the still image conversion processing shown in Fig. 23 as well as the processing shown in Fig. 19, the occurrences of seek operations from the inner periphery to the outer periphery of the disc can be reduced, thereby significantly decreasing the time for finalizing processing.

The above-described still image conversion processing is executed when performing finalizing processing. However, it is not necessary that the above-described still image conversion processing be executed when performing finalizing processing.

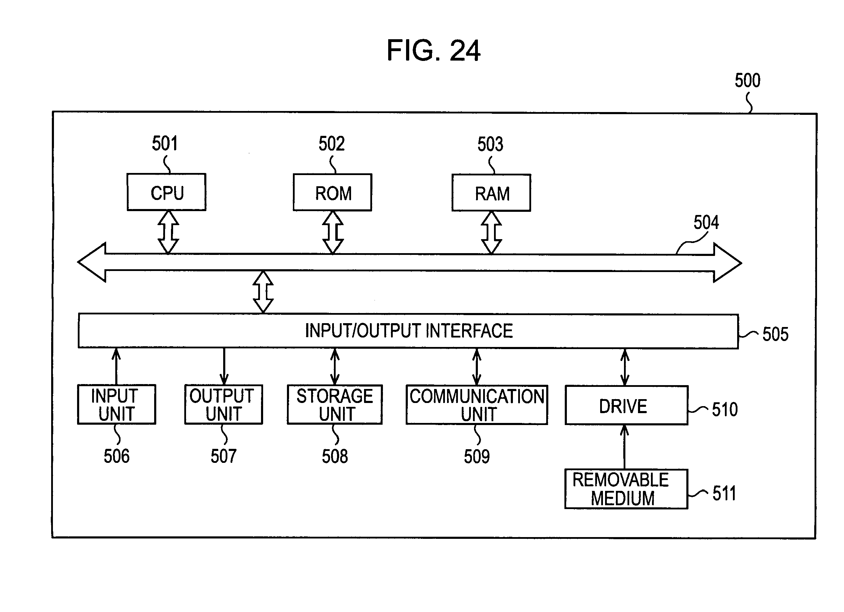

The above-described series of processing jobs may be executed by hardware or software. If software is used, a corresponding software program is installed, from a network or a recording medium, into a computer built in dedicated hardware or into a computer, for example, a general-purpose computer 500 shown in Fig. 24, which can execute various functions by installing various programs therein.

In Fig. 24, a CPU 501 executes various processing jobs according to programs stored in a ROM 502 or programs loaded from a storage unit 508 to a RAM 503. In the RAM 503, data necessary for the CPU 501 to execute various processing jobs are stored.

The CPU 501, the ROM 502, and the RAM 503 are connected to each other via a bus 504. An input/output interface 505 is also connected to the bus 504.

The input/output interface 505 is connected to an input unit 506 including a keyboard and a mouse, an output unit 507 including a display, such as a cathode ray tube (CRT) or a liquid crystal display (LCD), and a speaker, the storage unit 508 including a hard disk, and a communication unit 509 including a network interface card, such as a modem or a local area network (LAN) card. The communication unit 509 performs communication processing via a network, such as the Internet.

A drive 510 is also connected to the input/output interface 505 as necessary, and a removable medium 511, such as a magnetic disk (including a floppy disk (trademark), an optical disc (including a compact disc read only memory (CD-ROM) and a DVD), a magneto-optical disk (including a mini-disk (MD) (trademark)), or a semiconductor memory, is installed in the drive 510 as necessary, and a computer program read from the removable medium 511 is installed into the storage unit 508 as necessary.

If software is used for executing the above-described series of processing jobs, a corresponding software program is installed from a network, such as the Internet, or from a recording medium, such as the removable medium 511.

Such a recording medium may be formed of the removable medium 511 recording the program thereon, which is provided to the user separately from the personal computer 500, for distributing the program. Alternatively, the recording medium may be formed of the ROM 502 or a hard disk included in the storage unit 508, which is distributed to the user while being integrated in the personal computer 500.

In the present specification, steps forming the above-described series of processing jobs may be executed in chronological order described in the specification. Alternatively, they may be executed in parallel or individually.

It should be understood by those skilled in the art that various modifications, combinations, sub-combinations and alterations may occur depending on design requirements and other factors insofar as they are within the scope of the appended claims or the equivalents thereof.

## Claims

1. A recording apparatus for generating data of a menu screen for a disc on which data is recorded based on a predetermined format, comprising:
reading means for reading out, to a memory, image data of each representative image of a single or a plurality of playback units recorded on the disc and encoded by a predetermined encoding method;
generating means for decoding the image data read by the reading means to generate the menu screen;
encoded data storage means for encoding the menu screen generated by the generating means by a predetermined encoding method to store the encoded data in the memory;
determining means for determining whether the encoded data stored in the memory by the encoded data storage means satisfies a preset condition; and
disc recording means for recording the encoded data at a position of the disc determined by the predetermined format if the determining means determines that the encoded data stored in the memory satisfies the preset condition.

2. The recording apparatus according to claim 1, wherein the preset condition is such that the number of the encoded data stored in the memory by the encoded data storage means has reached a predetermined number.

3. The recording apparatus according to claim 1, wherein the preset condition is such that the amount of the encoded data stored in the memory by the encoded data storage means has reached a predetermined ratio of a storage capacity of the memory.

4. The recording apparatus according to claim 1, wherein the determining means determines whether the image data read out to the memory by the reading means satisfies a preset condition, and if the determining means determines that the image data stored in the memory satisfies the preset condition, the generating means generates the menu screen, the encoded data storage means encodes the menu screen by a predetermined encoding method to store the encoded data in the memory, and the disc recording means records the encoded data at a position of the disc determined by the predetermined format.

5. A recording method for a recording apparatus that generates data of a menu screen for a disc on which data is recorded based on a predetermined format, the recording method comprising the steps of:
reading out, to a memory, image data of each representative image of a single or a plurality of playback units recorded on the disc and encoded by a predetermined encoding method;
generating the menu screen by decoding the read image data;
encoding the generated menu screen by a predetermined encoding method to store the encoded data in the memory;
determining whether the encoded data stored in the memory satisfies a preset condition; and
recording the encoded data at a position of the disc determined by the predetermined format if it is determined that the encoded data stored in the memory satisfies the preset condition.

6. A program for a recording apparatus that generates data of a menu screen for a disc on which data is recorded based on a predetermined format, the program allowing a computer to execute processing comprising the steps of:
controlling the reading of image data of each representative image of a single or a plurality of playback units recorded on the disc and encoded by a predetermined encoding method to a memory;
controlling the generation of the menu screen by controlling the decoding of the read image data;
controlling the encoding of the generated menu screen by a predetermined encoding method to control the storage of the encoded data in the memory;
controlling a determination as to whether the encoded data stored in the memory satisfies a preset condition; and
controlling the recording of the encoded data at a position of the disc determined by the predetermined format if it is determined that the encoded data stored in the memory satisfies the preset condition.

7. A recording medium recording a program thereon for a recording apparatus that generates data of a menu screen for a disc on which data is recorded based on a predetermined format, the program allowing a computer to execute processing comprising the steps of:
controlling the reading of image data of each representative image of a single or a plurality of playback units recorded on the disc and encoded by a predetermined encoding method to a memory;
controlling the generation of the menu screen by controlling the decoding of the read image data;
controlling the encoding of the generated menu screen by a predetermined encoding method to control the storage of the encoded data in the memory;
controlling a determination as to whether the encoded data stored in the memory satisfies a preset condition; and
controlling the recording of the encoded data at a position of the disc determined by the predetermined format if it is determined that the encoded data stored in the memory satisfies the preset condition.

8. A recording apparatus for converting image data of a still image encoded by a first method into image data encoded by a second method, the image data of the still image being recorded on a disc on which data is recorded based on a predetermined format, the recording apparatus comprising:
reading means for reading out image data of a single or a plurality of still images encoded by the first method and recorded on the disc to a memory;
generating means for decoding the image data read by the reading means to generate a still image screen corresponding to the image data;
encoded data storage means for encoding the still image screen generated by the generating means based on the second method to store the encoded data in the memory;
determining means for determining whether the encoded data stored in the memory by the encoded data storage means satisfies a preset condition; and
disc recording means for recording the encoded data at a position of the disc determined by the predetermined format if the determining means determines that the encoded data stored in the memory satisfies the preset condition.

9. The recording apparatus according to claim 8, wherein the preset condition is such that the number of the encoded data stored in the memory by the encoded data storage means has reached a predetermined number.

10. The recording apparatus according to claim 8, wherein the preset condition is such that the amount of the encoded data stored in the memory by the encoded data storage means has reached a predetermined ratio of a storage capacity of the memory.

11. The recording apparatus according to claim 8, wherein the determining means determines whether the image data read out to the memory by the reading means satisfies a preset condition, and if the determining means determines that the image data stored in the memory satisfies the preset condition, the generating means generates the still image screen, the encoded data storage means encodes the still image screen by the second method to store the encoded data in the memory, and the disc recording means records the encoded data at a position of the disc determined by the predetermined format.

12. A recording method for a recording apparatus that converts image data of a still image encoded by a first method into image data encoded by a second method, the image data of the still image being recorded on a disc on which data is recorded based on a predetermined format, the recording method comprising the steps of:
reading out image data of a single or a plurality of still images encoded by the first method and recorded on the disc to a memory;
generating a still image screen corresponding to the image data by decoding the read image data;
encoding the generated still image screen by the second method to store the encoded data in the memory;
determining whether the encoded data stored in the memory satisfies a preset condition; and
recording the encoded data at a position of the disc determined by the predetermined format if it is determined that the encoded data stored in the memory satisfies the preset condition.

13. A program for a recording apparatus that converts image data of a still image encoded by a first method into image data encoded by a second method, the image data of the still image being recorded on a disc on which data is recorded based on a predetermined format, the program allowing a computer to execute processing comprising the steps of:
controlling the reading of image data of a single or a plurality of still images encoded by the first method and recorded on the disc to a memory;
controlling the generation of a still image screen corresponding to the image data by controlling the decoding of the read image data;
controlling the encoding of the generated still image screen by the second method to control the storage of the encoded data in the memory;
controlling a determination as to whether the encoded data stored in the memory satisfies a preset condition; and
controlling the recording of the encoded data at a position of the disc determined by the predetermined format if it is determined that the encoded data stored in the memory satisfies the preset condition.

14. A recording medium recording a program thereon for a recording apparatus that converts image data of a still image encoded by a first method into image data encoded by a second method, the image data of the still image being recorded on a disc on which data is recorded based on a predetermined format, the program allowing a computer to execute processing comprising the steps of:
controlling the reading of image data of a single or a plurality of still images encoded by the first method and recorded on the disc to a memory;
controlling the generation of a still image screen corresponding to the image data by controlling the decoding of the read image data;
controlling the encoding of the generated still image screen by the second method to control the storage of the encoded data in the memory;
controlling a determination as to whether the encoded data stored in the memory satisfies a preset condition; and
controlling the recording of the encoded data at a position of the disc determined by the predetermined format if it is determined that the encoded data stored in the memory satisfies the preset condition.

15. A recording apparatus that generates data of a menu screen for a disc on which data is recorded based on a predetermined format, comprising:
a reader configured to read out, to a memory, image data of each representative image of a single or a plurality of playback units recorded on the disc and encoded by a predetermined encoding method;
a generator configured to decode the image data read by the reader to generate the menu screen;
an encoded data storage unit configured to encode the menu screen generated by the generator by a predetermined encoding method to store the encoded data in the memory;
a determining unit configured to determine whether the encoded data stored in the memory by the encoded data storage unit satisfies a preset condition; and
a disc recorder configured to record the encoded data at a position of the disc determined by the predetermined format if the determining unit determines that the encoded data stored in the memory satisfies the preset condition.

16. A recording apparatus that converts image data of a still image encoded by a first method into image data encoded by a second method, the image data of the still image being recorded on a disc on which data is recorded based on a predetermined format, the recording apparatus comprising:
a reader configured to read out image data of a single or a plurality of still images encoded by the first method and recorded on the disc to a memory;
a generator configured to decode the image data read by the reader to generate a still image screen corresponding to the image data;
an encoded data storage unit configured to encode the still image screen generated by the generator based on the second method to store the encoded data in the memory;
a determining unit configured to determine whether the encoded data stored in the memory by the encoded data storage unit satisfies a preset condition; and
a disc recorder configured to record the encoded data at a position of the disc determined by the predetermined format if the determining unit determines that the encoded data stored in the memory satisfies the preset condition.
